# EUROPÄISCHE PATENTSCHRIFT

(11) **EP 3 557 192 B1**
(45) Veröffentlichungstag und Bekanntmachung des Hinweises auf die Patenterteilung: **21.10.2020**
(21) Anmeldenummer: 18168280.8
(22) Anmeldetag: 19.04.2018
(51) Int. Cl.: G01D 11/24, G01D 11/30

(54) **SENSORMODUL ZUR LUFTGÜTEMESSUNG**
SENSOR MODULE FOR MEASURING AIR QUALITY
MODULE CAPTEUR PERMETTANT DE MESURER LA QUALITÉ DE L'AIR

(43) Veröffentlichungstag der Anmeldung: 23.10.2019
(73) Patentinhaber: Sensirion Automotive Solutions AG, CH-8712 Stäfa (CH)
(72) Erfinder: Merz, Matthias, 8712 Stäfa (CH); Pustan, David, 8712 Stäfa (CH); Schmid, Tobias, 8712 Stäfa (CH)
(74) Vertreter: Toleti, Martin

(56) Entgegenhaltungen:
- WO-A1-01/29457
- DE-U1-202018 100 186
- US-A1- 2002 048 312
- US-B1- 6 341 892

## Beschreibung

### Gebiet der Erfindung

Die Erfindung betrifft ein Sensormodul zur Bestimmung einer Eigenschaft eines Fluids, insbesondere zur Klima- und/oder Luftgütemessung, im Besonderen in einem Innenraum oder einem Luftkanal eines Kraftfahrzeugs oder eines Gebäudes, sowie ein Verfahren zur Herstellung eines Sensormoduls.

### Hintergrund

Sensormodule zur Luftgütemessung messen verschiedene Parameter, die als charakteristisch für die Güte der umgebenden Luft angesehen werden. Dazu gehören beispielsweise Temperatur, relative Feuchtigkeit, Aerosolkonzentration oder eine Konzentration von verschiedenen Gasen wie Ozon, Stickstoffdioxid, Schwefeldioxid oder Kohlenmonoxid. Sensormodule zur Luftgütemessung werden zur Messung und Überwachung von Luftparametern eingesetzt, z.B. in städtischen Ballungsräumen. Außerdem werden sie bei der Messung von Luftparametern in Innenräumen verwendet, z.B. in Gebäuden oder Kraftfahrzeugen. Ein spezieller Anwendungsbereich ist die Luftzufuhr für solche Innenräume, wobei die Messwerte der Luftparameter zur Steuerung und Herbeiführung eines angenehmen Klimas im Innenraum herangezogen werden. Sensormodule zur Luftgütemessung werden aber auch in Außenluftmessungen eingesetzt, z.B. an Gebäuden oder Kraftfahrzeugen. Die DE 20 2018 100186 U1 beschreibt ein derartiges Sensormodul.

Herkömmliche Sensoranordnungen haben teilweise große Abmessungen, umfassen mehrere, nicht integrierte Einzelsensoren, sind empfindlich gegen mechanische Beschädigung oder aufwändig zu installieren, benötigen mehrere Kammern für die Messung verschiedener Luftparameter oder sind ungenau.

### Darstellung der Erfindung

Der vorliegenden Erfindung liegt die Aufgabe zugrunde, die Nachteile der herkömmlichen Sensoranordnungen zu beheben bzw. eine vorteilhafte alternative Ausführungsform bereitzustellen. Diese Aufgabe wird durch ein Sensormodul gemäss den Merkmalen des Anspruchs 1 gelöst, sowie durch ein Verfahren gemäss den Merkmalen des Anspruchs 14.

Das Sensormodul umfasst eine Leiterplatte, mindestens einen Sensor auf der Leiterplatte zum Aufnehmen einer Messgröße eines Fluids, insbesondere der umgebenden Luft, und ein Gehäuse für die Leiterplatte. Das Fluid kann dabei in gasförmigem Zustand, oder flüssigem Zustand, oder als Aerosol vorliegen. Da der Sensor zur Aufnahme einer Messgrösse eine Fluids vorgesehen ist, kann diese Messgrösse auch die Partikel in einer Flüssigkeit oder einem Gas betreffen, wie etwa Feinstaub in der Luft, und beispielsweise deren Konzentration oder Grösse angeben. Der Sensor kann dabei seinerseits wiederum mehrere Komponenten enthalten wie zum Beispiel einen Träger, insbesondere eine Sensor-Leiterplatte, und / oder eine Lichtquelle, und / oder optische Elemente, und / oder einen Photodetektor, insbesondere im Falle eines Partikelzählers als Sensor.

Das Gehäuse ist bevorzugt aus einem festen Material gefertigt, im Besonderen aus Kunststoff, z.B. aus PA, PBT, ABS oder PP, wodurch das Sensormodul robust ist. Das Gehäuse und die Leiterplatte mit dem mindestens einen Sensor sind bevorzugt einzeln gefertigt und dann zusammengesetzt. Mindestens ein Teil der Leiterplatte mit Ausnahme einer Aussparung für den mindestens einen Sensor ist mit einer Füllmasse vergossen. Die Aussparung muss nicht nur lokal begrenzt sein auf einen Zugang zum Sensor oder auf eine nähere Umgebung des Sensors. Insbesondere kann auch die Leiterplatte im Bereich des Sensors komplett frei sein von der Füllmasse, beispielsweise in einem Bereich der aus dem Gehäuse herausragt und auf dem der Sensor angebracht ist, wohingegen die Leiterplatte in einem anderen Bereich, beispielsweise im Gehäuseinneren mit der Füllmasse vergossen ist. In diesem Falle kann die Füllmasse auch gleich der später noch eingeführten Vergussmasse sein.

Das Vergießen der Leiterplatte mit der Füllmasse verstärkt die Leiterplatte und dichtet sie ab, sodass ein robustes Sensormodul entsteht, und der oder die Sensoren und etwaige Schaltungsbestandteile geschützt sind. Darüber hinaus macht das Vergießen der Leiterplatte eine Messkammer für den mindestens einen Sensor überflüssig, die aufgrund des eingeschlossenen Volumens die Messung einerseits träge machen würde und andererseits zu falschen Messungen infolge von angesammelten Ausgasungen aus dem Sensormodul selbst führen könnte. Somit ermöglicht das vorliegende Sensormodul eine schnelle und genaue Messung der zu bestimmenden Grösse, beispielsweise der Luftgüte.

Für die Füllmasse sind verschiedene Materialien denkbar. Bevorzugt ist ein Hot Melt, unter dem insbesondere ein Polyamid-Schmelzharz verstanden wird. Bevorzugt ist dieses Polyamid-Schmelzharz ausgebildet für Niedrigdruck-Giessverfahren, insbesondere für das Vergiessen mit Drücken von weniger als 20 bar. Das Polyamid-Schmelzharz ist bevorzugt ein thermoplastisches Polyamid-Schmelzharz, das heisst es wird bei höherer Temperatur in seinem fliessfähigen Zustand auf die Befestigungsvorrichtung aufgebracht, und erstarrt dann beispielsweise durch Abkühlung. Die Härte der erstarrten Füllmasse ist bevorzugt zwischen 70 und 90 Shore A. In einer weiteren Ausführungsform kann die Härte der ausgehärteten Füllmasse jenseits der 90 Shore A liegen.

Bevorzugt ist die Füllmasse ein Hot Melt, z.B. Henkel Technomelt PA 6771, oder Henkel Technomelt PA 653, oder Henkel Technomelt PA 658, oder Bostik Thermelt 181, oder Bostik Thermelt 865, oder Bostik Thermelt 866, oder ein UV-härtbarer Klebstoff oder ein UV-härtbares Material, oder eine Gussmasse. Diese haben den Vorteil, dass sie nicht unter hohem Druck und / oder allenfalls bei niedrigerer Temperatur angewendet werden müssen und damit eine Beschädigung von Komponenten des Sensormoduls vermieden wird. Es sind aber auch andere Klebstoffe, Gießmassen oder Harze denkbar. Beispielsweise kann ein gebräuchlicher Spritzguss verwendet werden, sofern es die Komponenten erlauben.

Eine Befestigungsvorrichtung dient dem Anbringen des Sensormoduls an einer Wandung. Diese Wandung kann die Wand eines das Fluid leitenden Kanals, beispielweise eines Luftkanals, oder aber die Wand eines das Fluid enthaltenden Behälters, beispielsweise eines Wasserkastens sein. Auch kann die Wandung die Wand eines Trägers sein, an dem das Sensormodul befestigt ist, um beispielsweise ein Fluid in der Umgebung des Trägers zu messen. Die Befestigungsvorrichtung ist bevorzugt ein Bestandteil des Gehäuses, d.h. ist einstückig mit diesem ausgebildet. Die Befestigungsvorrichtung muss nicht notwendiger Weise besonders aufgeprägte Elemente aufweisen. Beispielhaft mag im Einzelfall bereits eine blosse Wand des Gehäuses als Befestigungsvorrichtung dienen, falls das Gehäuse mit dieser Wand an dem Träger anliegen oder befestigt werden soll, allenfalls zusammen mit weiteren Elementen.

Das Sensormodul weist eine Dichtung an der Befestigungsvorrichtung auf. Es muss notwendigerweise nicht die gesamte Befestigungsvorrichtung mit einer Dichtung bedeckt sein. Vorzugsweise ist ein Teil der Befestigungsvorrichtung mit der Dichtung bedeckt, beispielsweise in Form eines Rings. Diese Dichtung ist dem Sensormodul zugeordnet, das heisst, sie ist auf der Befestigungsvorrichtung, insbesondere auf dem Gehäuse des Sensormoduls aufgebracht, bevorzugt darauf ge- oder vergossen. Ist das Sensormodul an dem Kanal oder Behälter oder Träger befestigt, so liegt zwischen Gehäuse und Wandung noch die Dichtung und dichtet den Kanal oder den Behälter ab, sodass insbesondere das Fluid nicht daraus entweichen kann. Durch die Befestigung des Sensormoduls an der Wandung wird die Dichtung bevorzugt gequetscht und dichtet ab.

Für die Dichtung sind verschiedene Materialien denkbar. Bevorzugt ist ein Hot Melt, unter dem insbesondere ein Polyamid-Schmelzharz verstanden wird. Bevorzugt ist dieses Polyamid-Schmelzharz ausgebildet für Niedrigdruck-Giessverfahren, insbesondere für das Vergiessen mit Drücken von weniger als 20 bar. Das Polyamid-Schmelzharz ist bevorzugt ein thermoplastisches Polyamid-Schmelzharz, das heisst es wird bei höherer Temperatur in seinem fliessfähigen Zustand auf die Befestigungsvorrichtung aufgebracht, und erstarrt dann aus beispielsweise durch Abkühlung. Die Härte der erstarrten Dichtung ist bevorzugt zwischen 70 und 90 Shore A. In einer weiteren Ausführungsform kann die Härte der ausgehärteten Dichtung jenseits der 90 Shore A liegen.

Bevorzugt ist die Dichtung ein Hot Melt, z.B. Henkel Technomelt PA 6771, oder Henkel Technomelt PA 653, oder Henkel Technomelt PA 658, oder Bostik Thermelt 181, oder Bostik Thermelt 865, oder Bostik Thermelt 866, oder ein UV-härtbarer Klebstoff oder ein UV-härtbares Material, oder eine Gussmasse. Diese haben den Vorteil, dass sie nicht unter hohem Druck angewendet werden müssen und damit eine Beschädigung von Komponenten des Sensormoduls vermieden wird. Auch kann die Dichtung im gleichen Prozessschritt erstellt werden wie der teilweise Verguss der Leiterplatte mit der Füll- und /oder der Vergussmasse.

Es sind aber auch andere Klebstoffe, Gießmassen oder Harze denkbar. Beispielsweise kann ein gebräuchlicher Spritzguss verwendet werden, sofern es die Komponenten erlauben. Durch das Aufbringen der Dichtung auf die Befestigungsvorrichtung ist Erstere bevorzugt unlösbar mit Letzterer verbunden, insbesondere im Gegensatz zu beispielsweise einem nur eingelegten O-Ring als Dichtung. Unlösbar in diesem Kontext bedeutet, dass die Dichtung nicht mechanisch von ihrem Untergrund abgelöst werden kann, ohne dass sie zerstört wird, oder dass der Untergrund zerstört wird.

In einer ersten Ausführungsform ragt ein Teil der Leiterplatte aus einer Öffnung im Gehäuse heraus, wobei sich der mindestens eine Sensor auf einer Vorderseite des herausragenden Teils der Leiterplatte befindet.

Wenn die Leiterplatte in das Gehäuse eingesetzt ist, ragt der Teil mit dem Sensor zur Messung beispielsweise der Luftgüte an einer Seite, die als Vorderseite des Gehäuses bezeichnet wird, aus dem Gehäuse heraus. Insofern ragt also bei befestigtem Sensormodul der aus dem Gehäuse hervorstehende Teil der Leiterplatte in den Kanal beziehungsweise den Behälter, oder ragt aus dem Träger hervor, sodass der Sensor auf dem herausragenden Teil der Leiterplatte dem Fluid exponiert ist.

In einer bevorzugten Ausführungsform ist die Vorderseite des herausragenden Teils der Leiterplatte mit Ausnahme einer Aussparung für den mindestens einen Sensor mit der Füllmasse vergossen. Über die Aussparung kann der mindestens eine Sensor direkt in Kontakt mit dem Fluid, beispielsweise mit der umgebenden Luft stehen. Zusätzlich zur Vorderseite kann auch eine der Vorderseite gegenüberliegende Rückseite des herausragenden Teils der Leiterplatte mit Ausnahme einer weiteren Aussparung, die dem mindestens einen Sensor gegenüberliegt, mit der Füllmasse vergossen sein. Alternativ kann auch ein Teil des Gehäuses die Rückseite der Leiterplatte zumindest teilweise unterstützen und mit der Leiterplatte vergossen sein. Außerdem kann zusätzlich zumindest die Öffnung im Gehäuse, aus der die Leiterplatte herausragt, mit der Füllmasse vergossen sein. In einer Ausführungsform befindet sich auch auf der Rückseite der Leiterplatte mindestens ein Sensor.

Die Befestigungsvorrichtung enthält bevorzugt einen Anschlag zum Anlegen des Gehäuses an die Wandung des Kanals, Behälters oder Trägers. Die Dichtung ist dann auf der Seite des Anschlags aufgebracht, die in montiertem Zustand des Sensormoduls der Wandung des Kanals, Behälters oder Trägers zugewandt ist, und ist bevorzugt eine radiale Dichtung. Der Anschlag mag dabei ein weiteres Hineinrutschen des Sensormoduls in den Kanal oder Behälter verhindern und ist bevorzugt Teil eines Befestigungsmittels des Gehäuses zum Anbringen des Sensormoduls an einem Träger.

Im Falle der aus der Gehäuseöffnung herausragenden Leiterplatte befindet sich das Befestigungsmittel und damit der Anschlag bevorzugt an einer Vorderseite des Gehäuses, die auch durch die Öffnung definiert ist. Bevorzugt hat das Befestigungsmittel die Form einer Steckverbindung, z.B. eines Bajonettverschlusses.

Das Befestigungsmittel des Gehäuses kann bevorzugt einen Zylinderring aufweisen, der im befestigten Zustand durch eine Wandung des Kanals, Behälters oder Trägers geführt ist, an dem das Sensormodul angebracht ist. Die Fläche des Anschlags ist dann bevorzugt senkrecht ausgerichtet zum Mantel des Zylinderrings. Die ein oder mehreren Kanäle sind bevorzugt in Form von Durchbrüchen durch den Zylinderring ausgebildet. Das Sensormodul wird also zum Befestigen bevorzugt in eine diese Öffnung des Kanals oder des Behälters oder des Trägers eingeführt bis zu seinem Anschlag beziehungsweise der Dichtung auf dem Anschlag.

In einer alternativen Ausführungsform ist die Leiterplatte vollständig im Gehäuse angeordnet. Das Gehäuse mag in dieser Ausführungsform aber dennoch eine Öffnung aufweisen, über die das zu messende Fluid an den oder die auf der Leiterplatte angeordneten Sensoren herantreten kann. Da ja die Füllmasse auf der Leiterplatte zumindest einen Zugang zum Sensor freigibt, kann also auch bei Vollverguss der Leiterplatte mit Ausnahme des Zugangs das Fluid den Sensor erreichen. In einer bevorzugten Variante ist dabei der Sensor gegen die Öffnung des Gehäuses gerichtet.

Bevorzugt weist die Befestigungsvorrichtung einen Gehäusevorsprung oder eine Senke im Gehäuse auf, an der bzw. in der die Dichtung angebracht und damit als axiale Dichtung ausgebildet ist. Eine solche Befestigungsvorrichtung mag mit einem Gegenstück (Senke bzw. Vorsprung) an der Wandung des Kanals, Behälters oder Trägers zusammenwirken, oder sogar eine Steck-, Schraub- oder Rastverbindung bilden, bei welcher die Dichtung an geeigneter Stelle am Gehäuse des Sensormoduls angeordnet ist.

Die Dichtung und die Füllmasse bestehen aus dem gleichen Material. In einer Variante sind Dichtung und Füllmasse voneinander getrennt, und, das Herstellungsverfahren betreffend auch in getrennten Vergussschritten aufgebracht, bevorzugt mit unterschiedlichen Angusspunkten, also Einleitungsstellen für das Material. In einer anderen Variante jedoch sind die Dichtung und die Füllmasse miteinander verbunden. Hierbei sind beide Komponenten - Dichtung und Füllmasse - nicht nur aus dem gleichen Material, sondern sind bevorzugt auch in einem einzigen Vergussschritt hergestellt. Dies bedeutet, dass das Material nur einem einzigen Angusspunkt am oder im Gehäuse zugeführt werden muss, um die Dichtung und die Füllmasse in einem einzigen Vergussschritt zu herzustellen. Hierfür sind insbesondere ein oder mehrere Kanäle im Gehäuse vorgesehen, die einen Bereich am Gehäuse, in dem die Dichtung entstehen soll, mit einem Bereich an der Leiterplatte, in dem die Füllmasse die Leiterplatte zumindest teilweise abdichten soll, verbinden. Ist der Angusspunkt im Bereich der Leiterplatte, so wird diese zuerst mit Material bedeckt bevor das Material durch die ein oder mehreren Kanäle im Gehäuse hindurchtritt und auch die Dichtung bildet. Ist der Angusspunkt dagegen im Bereich der zu bildenden Dichtung, so wird zunächst die Dichtung gegossen, bevor das Material durch die ein oder mehrere Kanäle hindurchtritt und auch die Füllmasse für die Leiterplatte bildet. Im fertig vergossenen Zustand sind dann die ein oder mehrere Kanäle mit dem Material befüllt.

Das Gehäuse kann eine weitere Öffnung auf einer Seite umfassen, die an die Vorderseite mit der ersten Öffnung angrenzt. Die weitere Öffnung kann beispielsweise benutzt werden, um die Leiterplatte mit dem mindestens einen Sensor einfach in das Gehäuse einzuführen. Im fertigen Zustand ist die weitere Öffnung bevorzugt mit einer Vergussmasse vergossen. Für die Vergussmasse sind verschiedene Materialien denkbar. Bevorzugt ist ein Hot Melt, unter dem insbesondere ein Polyamid-Schmelzharz verstanden wird. Bevorzugt ist dieses Polyamid-Schmelzharz ausgebildet für Niedrigdruck-Giessverfahren, insbesondere für das Vergiessen mit Drücken von weniger als 20 bar. Das Polyamid-Schmelzharz ist bevorzugt ein thermoplastisches Polyamid-Schmelzharz, das heisst es wird bei höherer Temperatur in seinem fliessfähigen Zustand auf die Befestigungsvorrichtung aufgebracht, und erstarrt dann aus bevorzugt durch Abkühlung. Die Härte der erstarrten Vergussmasse ist bevorzugt zwischen 70 und 90 Shore A. In einer weiteren Ausführungsform kann die Härte der ausgehärteten Vergussmasse jenseits der 90 Shore A liegen.

Bevorzugt ist die Vergussmasse ein Hot Melt, z.B. Henkel Technomelt PA 6771, oder Henkel Technomelt PA 653, oder Henkel Technomelt PA 658, oder Bostik Thermelt 181, oder Bostik Thermelt 865, oder Bostik Thermelt 866, oder ein UV-härtbarer Klebstoff oder ein UV-härtbares Material, oder eine Gussmasse. Diese haben den Vorteil, dass sie nicht unter hohem Druck angewendet werden müssen und damit eine Beschädigung von Komponenten des Sensormoduls vermieden wird. Es sind aber auch andere Klebstoffe, Gießmassen oder Harze denkbar. Beispielsweise kann ein gebräuchlicher Spritzguss verwendet werden, sofern es die Komponenten erlauben.

In einer bevorzugten Ausführungsform bestehen die Dichtung, die Füllmasse und die Vergussmasse aus dem gleichen Material. In einer Variante sind Dichtung, Füllmasse, und / oder Vergussmasse voneinander getrennt, und, das Herstellungsverfahren betreffend auch in zwei oder drei getrennten Vergussschritten aufgebracht, bevorzugt mit zwei oder drei Angusspunkten am / im Gehäuse. In einer anderen Variante jedoch sind die Dichtung, die Füllmasse und die Vergussmasse miteinander verbunden. Hierbei sind alle Komponenten - Dichtung, Füllmasse und Vergussmasse - nicht nur aus dem gleichen Material, sondern bevorzugt auch in einem einzigen Vergussschritt hergestellt. Dies bedeutet, dass das Material nur einem einzigen Angusspunkt am oder im Gehäuse zugeführt werden muss, um die Dichtung, die Füllmasse und die Vergussmasse in einem einzigen Vergussschritt zu herzustellen. Entsprechende Kanäle oder Verbindungen sind hierzu im Gehäuse wo nötig vorzusehen, die einen Bereich am Anschlag, in dem die Dichtung entstehen soll, einen Bereich an der Leiterplatte, in dem die Füllmasse entstehen soll und einen Bereich, in dem die Vergussmasse entstehen soll, verbinden.

Weiterhin kann die gesamte Leiterplatte mit der Füllmasse vergossen sein, was ein kompaktes und abgedichtetes Sensormodul ermöglicht, und welches Vergiessen bevorzugt in einem Arbeitsschritt erfolgt, sodass die Vergussmasse einteilig ausgebildet ist. Ausgenommen davon sind lediglich eine Aussparung für den mindestens einen Sensor und in einer Weiterbildung eine weitere Aussparung, die dem mindestens einen Sensor gegenüberliegt und herstellungsbedingt entstehen kann, wie weiter unten erläutert wird. Je nach Ausbildung und Anordnung der Leiterplatte, beispielsweise falls diese komplett im Gehäuse angeordnet ist, kann die Füllmasse gleich der Vergussmasse sein, also mithin die Füllmasse gleichzeitig die Leiterplatte umschliessen und das Gehäuseinnere füllen. In einer anderen Ausführungsform kann ein Teil der oder die gesamte Rückseite der Leiterplatte vom Gehäuse abgedeckt sein.

In einer bevorzugten Ausführungsform ist ein Grundkörper des Gehäuses quaderförmig. Der quaderförmige Teil dient als Aufnahme für die Leiterplatte. Je nach Verwendungszweck und Anschlussmöglichkeiten kann das Gehäuse weitere Teile umfassen. Beispielteile werden im Folgenden beschrieben.

Das Gehäuse umfasst bevorzugt einen Stecker, über den die Leiterplatte von außerhalb des Sensormoduls elektrisch kontaktiert ist. In einer bevorzugten Ausführungsform ist der Stecker ein Standardstecker mit elektrischen Kontakten, über die eine Stromversorgung und ein Auslesen der Messdaten des mindestens einen Sensors bewerkstelligt werden. Der Stecker kann sich beispielsweise an einer Seite des Gehäuses befinden, die an die Vorderseite mit der Öffnung angrenzt oder ihr gegenüberliegt.

Im Falle einer aus dem Gehäuse herausragenden Leiterplatte ist das Befestigungsmittel bevorzugt so ausgeformt, dass in Betriebsposition der Teil der Leiterplatte mit dem mindestens einen Sensor in den Luftkanal hineinragt, während sich der Stecker außerhalb des Luftkanals befindet. In dieser Variante weist das Gehäuse zum Einführen der Leiterplatte durch die weitere Öffnung bevorzugt eine Führungsvorrichtung auf. Im Besonderen kann die Führungsvorrichtung eine Abschrägung zum schrägen Einführen der Leiterplatte in das Gehäuse umfassen, wobei die Abschrägung schräg zur Seite mit der weiteren Öffnung angeordnet ist. Beim Einführen der Leiterplatte wird darauf geachtet, dass erhabene Bauteile wie Sensorchips auf der Leiterplatte nicht beschädigt werden. Ein sachgemäßes Einführen erfolgt mit genügend Abstand zur Abschrägung. Im nächsten Schritt wird die Leiterplatte bevorzugt auf die Abschrägung gedrückt. Abschließend wird die Leiterplatte über die Abschrägung in ihre finale Position im Gehäuse gekippt.

Außerdem kann das Gehäuse zum Arretieren der Leiterplatte nach dem Einführen eine Arretierungsvorrichtung umfassen. Die Arretierungsvorrichtung kann als Kunststoffklammer im Gehäuse ausgebildet sein und hält die Leiterplatte für den Schritt des Vergießens in ihrer finalen Position. Denkbar sind zur Arretierung auch das Verschweißen oder Verpressen eines mit dem Gehäuse verbundenen Pins auf der Leiterplatte oder das Verlöten oder Verpressen eines fest mit dem Gehäuse verbundenen Steckerpins auf der Leiterplatte.

Bevorzugt misst ein Sensor des Sensormoduls eine Temperatur eines Fluids, beispielsweise der umgebenden Luft. Der Temperatursensor kann beispielsweise einen temperaturabhängigen elektrischen Widerstand enthalten. In einer anderen Ausführungsform misst ein Sensor eine relative Feuchtigkeit eines Fluids, beispielsweise der umgebenden Luft. Im Besonderen können der Temperatursensor und der Feuchtesensor in einem einzigen Chip integriert sein, wodurch beispielsweise ein Taupunkt der umgebenden Luft bestimmt werden kann.

Temperatur und relative Feuchtigkeit der Luft sind wichtige Parameter für die Luftgüte und ein angenehmes Klima. Daher wird das Sensormodul bevorzugt zur Messung der Luftgüte in einem Luftkanal oder einem Innenraum, im Besonderen eines Kraftfahrzeugs oder eines Gebäudes, eingesetzt. Darüber hinaus kann ein Messwert zur Steuerung des Klimas in dem Innenraum verwendet werden, was beispielsweise über die Steuerung der Luftzufuhr oder eine Klimaanlage bewerkstelligt wird.

In einer Ausführungsform ist ein Sensor des Sensormoduls ein Partikelsensor, der bevorzugt eine Konzentration von Partikeln in einem umgebenden Fluid misst, beispielsweise in der umgebenden Luft.

In einer anderen Ausführungsform ist ein Sensor des Sensormoduls ein Gassensor, der bevorzugt eine Konzentration eines Gases in einem umgebenden Fluid misst, beispielsweise in der umgebenden Luft. Der oben genannte Temperatursensor oder die Kombination aus Temperatur- und Feuchtesensor kann auch durch einen solchen Gassensor ergänzt werden. Die Konzentration von verschiedenen Gasen kann ebenfalls eine wichtige Eigenschaft oder Parameter eines Fluids sein, den es zu bestimmen gilt, beispielsweise die Luftgüte. So ist beispielsweise eine erhöhte Konzentration von Ozon, Stickstoffdioxid, Schwefeldioxid oder Kohlenmonoxid gesundheitsschädlich. Messwerte des Gassensors können daher ebenfalls zur Steuerung der Luftzufuhr oder der Klimaanlage verwendet werden. So kann beispielsweise die Luftzufuhr von außen abgestellt werden, wenn im Luftzufuhrkanal eine erhöhte Konzentration an gesundheitsschädlichen Gasen festgestellt wird.

Bevorzugt ist der Sensor zur Messung einer Gaskonzentration ein MOX-Sensor (Metalloxid). Zur Erreichung der Betriebstemperatur umfasst ein solcher Sensor ein Heizelement. Um die Messung von anderen Parametern, z.B. der Temperatur, nicht zu verfälschen, ist der Gassensor auf dem Teil der Leiterplatte, der aus dem Gehäuse herausragt, weit entfernt von den übrigen Sensoren angebracht. Eine mögliche Anordnung ist, dass die übrigen Sensoren weit in den Luftkanal hineinragen, während sich der Gassensor nahe am Rand des Luftkanals befindet.

Dazu kann der herausragende Teil der Leiterplatte stufenförmig ausgeprägt sein und zwei Stufen umfassen, wobei die zwei Stufen um die Längen l₁ und l₂ aus dem Gehäuse herausragen und l₁ > l₂ ist. Ein Abstand des Gassensors von der Öffnung im Gehäuse ist dann bevorzugt höchstens 25% von l₁, während ein Abstand der übrigen Sensoren von der Öffnung bevorzugt mindestens 75% von l₁ ist.

In einer bevorzugten Ausführung umfasst das Sensormodul eine Stromversorgung. Die Stromversorgung ist bevorzugt auf der Leiterplatte angebracht, bekommt den elektrischen Strom über den Stecker zugeführt und versorgt den Sensor bzw. die Sensoren mit Strom.

Darüber hinaus kann das Sensormodul eine Datenverarbeitung für Messwerte von dem mindestens einen Sensor umfassen. Die Datenverarbeitung kann beispielsweise eine Kalibration der Messwerte, eine Berechnung zusammengesetzter Daten von verschiedenen Sensoren und/oder eine Mittelung durchführen. Denkbar ist auch, dass bestimmte Grenzwerte implementiert sind, bei deren Über- oder Unterschreitung durch die Messwerte ein Warnsignal ausgegeben wird, beispielsweise bei Überschreitung eines Grenzwerts für die Konzentration eines gesundheitsschädlichen Gases in der Luft. Die Datenverarbeitung wird ebenfalls von der Stromversorgung mit Strom versorgt und die gemessenen und/oder verarbeiteten Daten werden über den Stecker bereitgestellt.

Außerdem kann das Sensormodul mindestens einen ESD-Bügel (electrostatic discharge) aus einem elektrisch leitenden Material auf der Leiterplatte umfassen, der den mindestens einen Sensor zumindest teilweise räumlich überbrückt. Der ESD-Bügel ist mit einem Massenanschluss der Leiterplatte verbunden und schützt den mindestens einen Sensor vor Beschädigung durch elektrostatische Entladung. Bei verschiedenen Ausführungsformen ist der ESD-Bügel an nur einer Stelle auf der Leiterplatte befestigt oder er ist z.B. auf zwei gegenüberliegenden Seiten des Sensors mit der Leiterplatte verbunden. In einer bevorzugten Ausführungsform befindet sich zwischen dem ESD-Bügel und dem Sensor ein Abstand, z.B. in der Größenordnung von 0.1 mm, der es ermöglicht, dass der Sensor direkt in Kontakt mit der umgebenden Luft steht. Im Speziellen ist ein ESD-Bügel angedacht, der sich flächenmäßig über den gesamten Sensor erstreckt, an der Stelle des sensitiven Elements aber ein Loch aufweist, um Luftkontakt für den Sensor zu ermöglichen. Bevorzugt ist der ESD-Bügel auf der Leiterplatte teilweise mit Füllmasse vergossen, was die Robustheit und die Lebensdauer des Sensormoduls erhöht.

In einem weiteren Aspekt der Erfindung ist eine Sensoranordnung vorgeschlagen enthaltend ein Sensormodul nach einem der vorangehenden Weiterbildungen, sowie enthaltend einen Kanal oder einen Behälter für das Fluid oder einen Träger für das Sensormodul. Das Sensormodul ist dabei an einer Wandung des Kanals oder des Behälters oder des Trägers befestigt und mit seinem Anschlag in Anlage gebracht. Die Wandung weist insbesondere einen oder mehrere Vorsprünge auf, die in befestigtem Zustand des Sensormoduls in seine Dichtung gedrückt sind. Bevorzugt tritt dabei - falls vorhanden - der aus dem Gehäuse ragende Teil der Leiterplatte in eine Öffnung in der Wandung, sodass der Sensor dem Fluid in dem Kanal oder dem Behälter oder dem Fluid in der Umgebung des Trägers ausgesetzt ist.

Gemäss einem weiteren Aspekt der Erfindung ist ein Verfahren zum Herstellen eines Sensormoduls zur Bestimmung einer Eigenschaft eines Fluids vorgesehen, beispielsweise zur Klima- und / oder Luftgütemessung, umfassend die folgenden Schritte:
a. Bereitstellen einer Leiterplatte mit mindestens einem Sensor, der eine Messgröße des umgebenden Fluids, beispielsweise der umgebenden Luft misst, und eines Gehäuses für die Leiterplatte, sowie einer Befestigungsvorrichtung zum Befestigen des Sensormoduls an einer Wandung eines Kanals oder eines Behälters für das Fluid oder an einem Träger für das Sensormodul,
b. Einführen der Leiterplatte in das Gehäuse,
c. Vergießen eines Hot Melts oder eines UVhärtbaren Materials oder einer Gussmasse auf der Befestigungsvorrichtung zum Bilden einer Dichtung, und Vergiessen eines Teils der Leiterplatte zumindest mit Ausnahme einer Aussparung für den mindestens einen Sensor mit einer Füllmasse.

Die beiden Vergussschritte in c. können in dem Sinne gleichzeitig erfolgen, dass über zwei Angusspunkte einmal die Dichtung und ein andermal die Füllmasse vergossen wird, und diese Prozessschritte gleichzeitig erfolgen. Alternativ können in dem Szenario mit zwei Angusspunkten die Dichtung und die Füllmasse auch zeitlich sequentiell in dieser Reihenfolge oder in umgekehrter Reihenfolge vergossen werden. In einer weiteren bevorzugten Variante werden Dichtung und Füllmasse über einen einzigen Angusspunkt mit dem Material befüllt.

Im Falle einer durch eine Öffnung des Gehäuses hindurchtretenden Leiterplatte wird in Schritt c. bevorzugt eine Vorderseite des aus dem Gehäuse herausragenden Teiles der Leiterplatte vergossen, auf der sich der mindestens eine Sensor befindet, mit Ausnahme einer Aussparung für den mindestens einen Sensor mit einer Füllmasse. Bevorzugt wird zusätzlich eine der Vorderseite gegenüberliegende Rückseite des herausragenden Teils der Leiterplatte mit Ausnahme einer weiteren Aussparung, die dem mindestens einen Sensor gegenüberliegt, mit der Füllmasse vergossen wird, und bevorzugt auch zusätzlich die Öffnung im Gehäuse.

Bevorzugt werden in Schritt c. zusätzlich Hohlräume im Gehäuse und in der Leiterplatte samt dem mindestens einen Sensor vergossen, und zwar in demselben einzigen Vergussschritt, sodass lediglich eine Aussparung und eine weitere Aussparung für den mindestens einen Sensor sowie mögliche Hohlräume rückseitig des mindestens einen Sensors bestehen bleiben. Für das Vergussverfahren wird das Gehäuse samt der eingeführten Leiterplatte in Schritt c. bevorzugt in eine Form transferiert wird, die einen Stempel für die Aussparung für den mindestens einen Sensor aufweist.

Bevorzugt wird die Leiterplatte in Schritt b durch eine weitere Öffnung des Gehäuses eingeführt wird, bevorzugt unterstützt von einer Führungsvorrichtung und/oder einer Abschrägung im Gehäuse. Insbesondere wird dabei die Leiterplatte schräg in das Gehäuse durch die weitere Öffnung eingeführt, wobei ein Abstand der Leiterplatte zur Abschrägung im Gehäuse grösser gehalten wird als die Höhe des mindestens einen Sensors samt eines ESD-Bügels über der Leiterplatte, bevorzugt unterstützt durch die Führungsvorrichtung. Wenn dann der Teil der Leiterplatte mit dem mindestens einen Sensor durch die Öffnung aus dem Gehäuse herausragt, wird die Leiterplatte auf die Abschrägung gedrückt, bevorzugt unterstützt durch die Führungsvorrichtung. Dann wird die Leiterplatte über die Abschrägung gekippt in eine finale Position, wo sie bevorzugt von einer Arretierungsvorrichtung im Gehäuse arretiert wird.

Ein Stempel der Vergussform kann eine Kraft auf einen ESD-Bügel über dem mindestens einen Sensor ausüben und diesen vor dem Vergießen verformen und ein weiterer Stempel der Vergussform kann auf die Rückseite der Leiterplatte gegenüber dem ESD-Bügel eine Gegenkraft ausüben.

Wie es für den Fachmann offensichtlich ist, können synergistische Effekte aus der Kombination von Merkmalen unterschiedlicher Ausführungsformen entstehen. Obgleich diese nicht im Detail beschrieben sein mögen, sind sie ausdrücklich in den Offenbarungsgehalt der vorliegenden Schrift eingeschlossen.

### Kurze Beschreibung der Zeichnungen

Weitere vorteilhafte Ausgestaltungen der Erfindung ergeben sich aus den abhängigen Ansprüchen, und den anhand der Zeichnungen nachfolgend dargestellten Ausführungsbeispielen. Es zeigen:
Fig. 1 eine Aufsicht von oben auf ein Sensormodul zur Bestimmung einer Eigenschaft eines Fluids, beispielsweise zur Luftgütemessung, mit einem Temperatur- /Feuchte- und einem Gassensor auf der Vorderseite einer Leiterplatte gemäß einer ersten Ausführungsform der Erfindung,
Fig. 2 eine Ansicht von der Seite auf das Sensormodul gemäß der ersten Ausführungsform,
Fig. 3 eine Ansicht von vorne auf das Sensormodul gemäß der ersten Ausführungsform,
Fig. 4 eine Ansicht von hinten auf das Sensormodul gemäß der ersten Ausführungsform,
Figs. 5 und 6 zwei Ansichten aus verschiedenen Blickwinkeln im Raum auf das Sensormodul gemäß der ersten Ausführungsform,
Fig. 7 eine Aufsicht von oben auf ein Sensormodul zur Bestimmung einer Eigenschaft eines Fluids, beispielsweise zur Luftgütemessung, mit einem Temperatur-/Feuchtesensor auf der Vorderseite einer Leiterplatte gemäß einer zweiten Ausführungsform der Erfindung,
Figs. 8 - 10 schematische Schnitte durch das Sensormodul nach der zweiten Aufführungsform,
Fig. 11 eine Ansicht von unten auf das Sensormodul gemäß der zweiten Ausführungsform,
Fig. 12 eine perspektivische Ansicht auf das Sensormodul gemäß der zweiten Ausführungsform,
Figs. 13 und 14 schematische Schnitte durch ein Sensormodul nach einem Ausführungsbeispiel der Erfindung,
Fig. 15 eine Aufsicht von oben auf ein Sensormodul zur Bestimmung einer Eigenschaft eines Fluids, beispielsweise zur Luftgütemessung, mit einem Temperatur-/Feuchtesensor auf der Vorderseite einer Leiterplatte gemäß einer dritten Ausführungsform der Erfindung,
Figs. 16 - 19 je einen vertikalen Schnitt durch das Gehäuse des Sensormoduls, während eine Leiterplatte mit einem Sensor bei der Herstellung gemäß einer Ausführungsform eingeführt wird,
Fig. 20 eine Aufsicht von unten auf ein horizontal durchgeschnittenes Sensormodul zur Bestimmung einer Eigenschaft eines Fluids, beispielsweise zur Luftgütemessung, mit einer Führungsvorrichtung und Ausrichtungspins für die Leiterplatte,
Figs. 21 bis 23 einen vertikalen Schnitt durch das Gehäuse mit verschiedenen Ausführungsformen einer Arretierungsvorrichtung für die Leiterplatte,
Figs. 24 und 25 einen vertikalen Schnitt durch das Gehäuse mit zwei Varianten einer Montage eines Steckers,
Fig. 26 eine Aufsicht von oben auf das Sensormodul mit Kennzeichnung eines vertikalen Schnitts A-B durch die Leiterplatte für die folgenden Figuren 27 bis 29,
Figs. 27 bis 29 den vertikalen Schnitt A-B durch die Leiterplatte, und
Fig. 30 bis 32 Schnitte durch Sensormodule nach Ausführungsbeispielen der Erfindung.

### Wege zur Ausführung der Erfindung

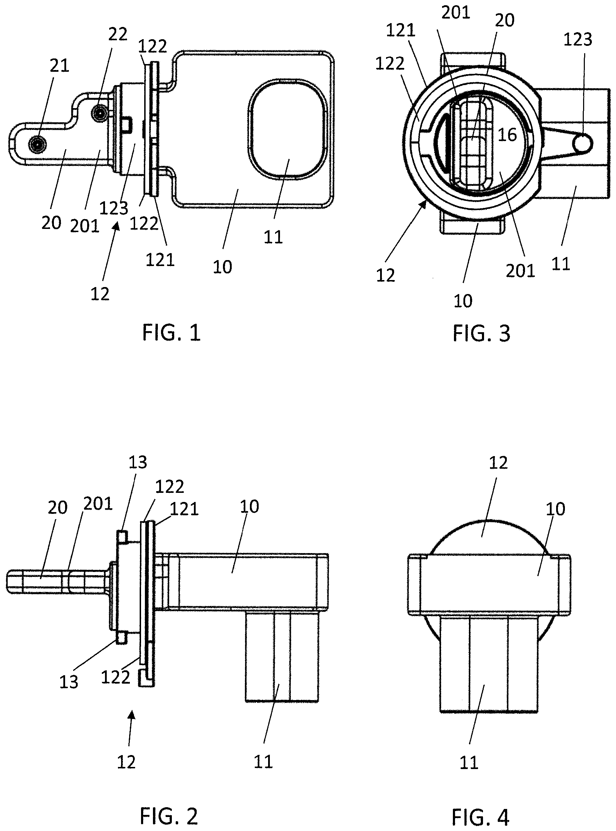

Fig. 1 zeigt eine Aufsicht von oben auf ein Sensormodul zur Bestimmung einer Eigenschaft eines Fluids, beispielsweise zur Luftgütemessung, mit einem Temperatur-/Feuchtesensor 21 und einem Gassensor 22 auf der Vorderseite einer Leiterplatte 20 gemäß einer ersten Ausführungsform der Erfindung, welche Leiterplatte 20 in der Figur 1 unter einer darauf aufgebrachten Füllmasse 201 verborgen ist. Der Sensor 21 ist ein integrierter Sensor für die Messung der Temperatur und der relativen Feuchtigkeit in der umgebenden Luft. Der Gassensor 22 ist ein MOX-Sensor (Metalloxid), der bevorzugt die Konzentration eines Gases, z.B. von NO2, SO2, O3, CO, VOC (volatile organic compounds), in der umgebenden Luft misst. Andere Sensorkombinationen 21, 22 sind vorstellbar.

Die beiden Sensoren 21 und 22 werden über die Leiterplatte 20 mit Strom versorgt. Die Leiterplatte 20 ist zur Verstärkung und Dichtung mit der Füllmasse 201 eingekapselt, bevorzugt mit einem Hot Melt, z.B. Henkel Technomelt PA 6771 oder Bostik Thermelt 181. Die Füllmasse 201 weist Aussparungen bei den Sensoren 21 und 22 auf, damit die umgebende Luft in Kontakt mit den sensitiven Elementen treten kann. Aus der Fig. 1 ist ersichtlich, dass die Sensoren 21 und 22 nicht mit Messkammern umgeben sind, sondern direkt dem umgebenden Fluid, beispielsweise der umgebenden Luft ausgesetzt sind, z.B. dem Luftstrom in einem Luftzufuhrkanal. Dies hat die Vorteile, dass die Messung nicht durch einen trägen Fluid-/ bzw. Luftaustausch in der Kammer verzögert wird, und dass die Messung nicht durch Ausgasungen, die sich in einer Kammer ansammeln könnten, verfälscht wird.

In der gezeigten Ausführungsform ist der Temperatur-/Feuchtesensor 21 nahe der Spitze der Leiterplatte 20 positioniert, während sich der Gassensor 22 nahe des Gehäuses 10 befindet. Somit sind die beiden Sensoren 21 und 22 räumlich deutlich voneinander getrennt, was eine gegenseitige Beeinflussung verhindert, im Speziellen eine Verfälschung der Temperaturmessung durch ein Heizelement im Gassensor 22.

Auf der Leiterplatte 20 sind ebenfalls eine Stromversorgung und eine Datenverarbeitung für die Messwerte angebracht (beide nicht gezeigt, da innerhalb des Gehäuses 10 liegend). Diese befinden sich auf dem Teil der Leiterplatte 20, der nicht aus dem Gehäuse 10 herausragt. Das Gehäuse 10 ist aus Kunststoff gefertigt, z.B. aus PA,PBT, ABS oder PP, und schützt das Sensormodul vor mechanischer Beschädigung. Der Anschluss des Sensormoduls an eine externe Stromversorgung und Weiterverarbeitung der Daten ist über elektrische Kontakte in einem Stecker 11 bewerkstelligt. In der in Fig. 1 gezeigten Ausführungsform ist der Stecker 11 an einer als Oberseite bezeichneten Seite des Gehäuses 10 ausgebildet, während die Leiterplatte 20 an einer Seite des Gehäuses 10, die als Vorderseite definiert ist, durch eine Öffnung 16 (siehe Fig. 3) aus dem Gehäuse 10 herausragt. Abweichende Anordnungen sind möglich, z.B. dass sich der Stecker 11 an einer der Vorderseite gegenüberliegenden Hinterseite des Gehäuses 10 befindet.

Ein weiterer Teil des Gehäuses 10 in Fig. 1 ist als Befestigungsmittel 12 ausgebildet zur Befestigung des Sensormoduls an einem Träger, z.B. zur Anbringung an einem Luftzufuhrkanal für den Innenraum eines Kraftfahrzeugs oder eines Gebäudes oder an einem das Fluid enthaltenden Behälters. Das Befestigungsmittel 12 weist einen Zylinderring 123 auf, der die Öffnung 16 umgibt, aus der die Leiterplatte 20 ragt. Ferner weist das Befestigungsmittel 12 einen Anschlag 121 auf, der bei befestigtem Sensormodul an einer Wandung des Kanals, des Behälters oder des Trägers anliegt mittels einer Dichtung 122 auf dem Anschlag 121. Im vorliegenden Ausführungsbeispiel ist der Anschlag 121 ringförmig ausgebildet und umschliesst die Öffnung 16, aus der die Leiterplatte 20 aus dem Gehäuse 10 heraustritt. Auf derjenigen Seite des Anschlags 121, die der Wandung des Kanals oder Behälters oder der Wandung des Trägers zugewandt ist, an der das Sensormodul befestigt wird, ist die in diesem Fall auch ringförmige Dichtung 122 angebracht.

Bevorzugt ist das Befestigungsmittel 12 als Bajonettverschluss ausgebildet. Durch die Befestigung mit einem Bajonettverschluss kann eine luftdichte Verbindung mit gleichzeitiger Arretierung des Sensormoduls am Träger hergestellt werden. Andere Ausführungsformen des Befestigungsmittels 12 sind aber ebenfalls möglich, z.B. über ein Gewinde.

Fig. 2 zeigt eine Ansicht von der Seite auf das Sensormodul gemäß der ersten Ausführungsform, während Fig. 3 eine Ansicht von vorne und Fig. 4 eine Ansicht von hinten illustrieren. In Fig. 2 wird deutlich, wie die Leiterplatte 20 mit den Sensoren an der Vorderseite des Gehäuses 10 aus diesem herausragt. Außerdem ist die Ausformung des Bajonettverschlusses mit zwei Zapfen 13 zur Arretierung augenfällig. Die Ansicht von Fig. 4 von hinten bietet sich für einen Betrachter, der von außerhalb des Luftzufuhrkanals auf das montierte Sensormodul blickt.

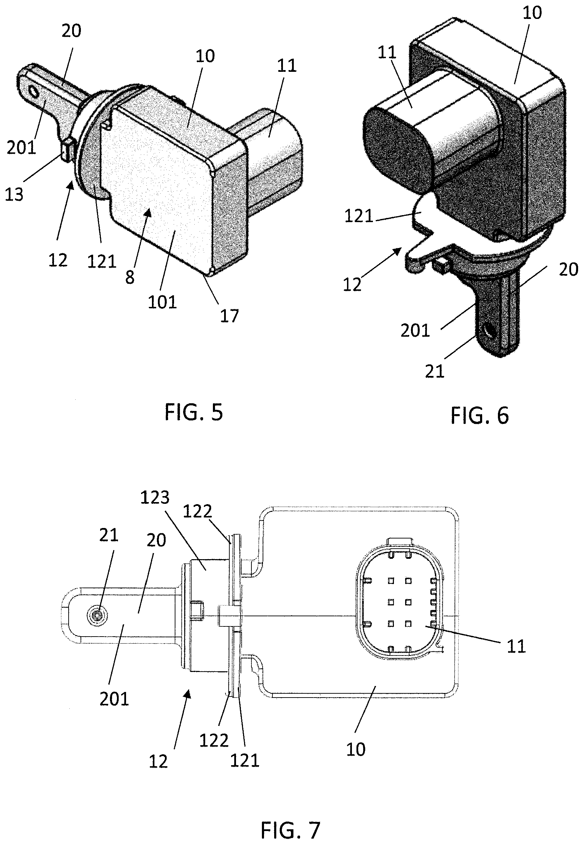

Fig. 5 zeigt eine räumliche Ansicht auf das Sensormodul von schräg unten gemäß der ersten Ausführungsform von Fig. 1-4. Dabei ist der Zapfen 13 des Bajonettanschlusses 12 deutlich sichtbar. Ferner ist eine Vergussmasse 101 sichtbar, mit der das Gehäuse 10 und die darin befindliche Leiterplatte 20 vergossen ist. Vor dem Vergiessen weist das Gehäuse 10 an seiner Unterseite eine entsprechende Öffnung 17 auf, die dann bevorzugt komplett gefüllt wird mit der Vergussmasse 101.

Fig. 6 ergänzt dies durch eine räumliche Ansicht von schräg oben. In dieser Ansicht ist die Aussparung erkennbar, die sich in der Einkapselung um die Leiterplatte 20 über dem Sensor 21 befindet und direkten Kontakt eines sensitiven Elements des Sensors 21 mit dem umgebenden Fluid, beispielsweise der umgebenden Luft ermöglicht.

Die Dichtung 122 und die Füllmasse 201 können in einer Ausführungsform voneinander separiert sein, und damit auch in zwei getrennten Vergussschritten erstellt werden, mit zwei unterschiedlichen Angusspunkten, einem für die Dichtung, und einem für die die Leiterplatte im Wesentlichen einhüllende Füllmasse. Bevorzugt bestehen die Dichtung 122 und die Füllmasse 201 dennoch aus dem gleichen Material, bevorzugt einem Hotmelt.

In einer anderen bevorzugten Variante sind die Dichtung 122 und die Füllmasse 201 miteinander verbunden. Hierbei ummantelt die Füllmasse 201 nicht nur wie im vorliegenden Ausführungsbeispiel gezeigt die Vorderseite des herausragenden Teils der Leiterplatte 20, sondern auch ihre Rückseite, und allenfalls auch noch ihre Seiten. Zusätzlich ist bevorzugt auch die Öffnung 16 mit der Füllmasse vergossen. Zum Erstellen der Dichtung 122 und der Füllmasse 201 in einem einzigen Vergussschritt kann das Befestigungsmittel vorteilhaft einen oder mehrere Kanäle aufweisen (nicht eingezeichnet), durch die das Material für die Dichtung 122 hindurchtritt, um die Dichtung 122 zu bilden. Hierzu wird das Sensormodul vor dem Vergiessen in eine Gussform eingelegt, in der das Sensormodul so positioniert ist, dass eine Negativform in der Gussform die Form der Dichtung 122 vorgibt, wie auch eine Negativform der Gussform die Ummantelung des herausragenden Teils der Leiterplatte 20 vorgibt. Wird dann die Gussform mit dem Material für Füllmasse 201 und Dichtung 122 befüllt, so füllen sich eben diese Negativformen, so dass nach dem Aushärten des Materials Dichtung 122 und Füllmasse 201 erstellt sind. Damit nur ein einziger Angusspunkt von Nöten ist, muss das Material zu einem der zu erstellenden Elemente Dichtung oder Füllmasse von dem anderen Element her gelangen. Dies wird durch eben den oder die Kanäle bewerkstelligt. Diese bleiben nach dem Vergiessen mit Material befüllt. Bevorzugt durchtreten diese ein oder mehrere Kanäle den Zylinderring 123 des Befestigungsmittels 12.

Ist im obigen Beispiel auch die Öffnung 16 zum Durchtreten der Leiterplatte 20 mit Füllmasse 201 vergossen, so kann der einzige Angusspunkt für das Vergiessen beispielsweise die Öffnung 17 des Gehäuses sein. In Figur 5 ist ein solcher beispielhafter Angusspunkt 8 eingezeichnet. Hier wird dann bevorzugt auch gleich die Vergussmasse 101 im selben Vergussschritt vergossen. In Summe wird also der Öffnung 17 das Material zugeführt, welches sich dann im Inneren des Gehäuses 10 ausbreitet, durch die Öffnung 16 austritt die Gussform für das Umgiessen des herausragenden Teils der Leiterplatte 20 füllt, durch die ein oder mehrere Kanäle im Gehäuse 10, insbesondere im Zylinderring 123 hindurchtritt, und die Gussform für die Dichtung 122 füllt, welche damit am Anschlag 121 aufgebaut wird. In diesem Falle ist ein einziger Angusspunkt 8 vorgesehen, und in einem einzigen Vergussschritt, bei dem Material über den einzigen Angusspunkt 8 zugeführt wird, werden sowohl Dichtung 122, Füllmasse 201 und Vergussmasse 101 erstellt, z.B. gegossen oder gespritzt, sodass die Leiterplatte mit Ausnahme der Sensoren 21 und 22 und allenfalls zugehörige durch Gegenlager verursachet Aussparungen eingegossen ist.

Fig. 7 zeigt eine Aufsicht von oben auf ein Sensormodul zur Bestimmung einer Eigenschaft eines Fluids, beispielsweise zur Luftgütemessung, mit einem Temperatur-/Feuchtesensor auf der Vorderseite einer Leiterplatte 20 gemäß einer zweiten Ausführungsform der Erfindung. Die zweite Ausführungsform umfasst zum großen Teil die gleichen Komponenten wie die erste Ausführungsform in Fig. 1-6. Dies sind ein Gehäuse 10 mit Ausformungen für einen Stecker 11 und ein Befestigungsmittel 12 in Form eines Bajonettverschluss 12, sowie eine in eine Füllmasse 201 eingekapselte Leiterplatte 20. Im Unterschied zu Fig. 1-6 zeigt Fig. 7 nur einen Sensor 21. In einer Ausführungsform ist dies wiederum ein integrierter Temperatur-/Feuchtesensor. Der Sensor 21 kann aber alternativ auch ein Gassensor sein.

Wiederum ist ein Anschlag 121 des Befestigungsmittels 12 ersichtlich, auf welchem Anschlag 121 eine Dichtung 122 in Form eines auf Dichtrings aufgebracht ist. Ferner weist das Gehäuse 10 und insbesondere sein Befestigungsmittel 12 abermals einen Zylinderring 123 auf, der die Öffnung 16 des Gehäuses 10 umschliesst. Der Anschlag 121 schliesst an den Zylinderring 123 an. Anschlag und Zylinderring 121, 123 sind bevorzugt einstückig mit dem Gehäuse 10 ausgebildet.

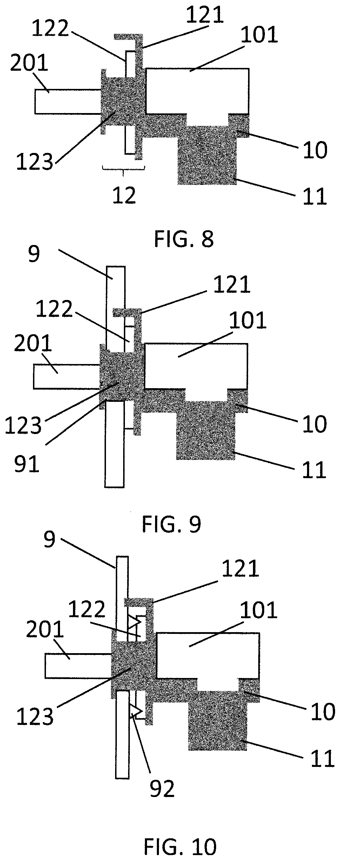

Die Figuren 8 bis 10 zeigen schematische Schnitte durch das Sensormodul nach der zweiten Ausführungsform. So ist das unbefestigte Sensormodul in Figur 8 in einer Seitenansicht gezeigt. In Figur 9 dagegen ist das Sensormodul befestigt an einer Wandung 9 eines Trägers befestigt. Es ist ersichtlich, dass das Sensormodul mit seinem Befestigungsmittel 12, in diesem Fall dem Bajonettverschluss, an dem Träger angebracht ist. Hierfür ist der Zylinderring 123 des Gehäuses 10 durch eine Öffnung 91 der Wandung 9 geführt. Mittels des Bajonettverschlusses wird das Gehäuse 10 mit seinem Anschlag 121 gegen den Träger 10 gedrückt, sodass die Dichtung 122 auf dem Anschlag 121 komprimiert wird und eine Abdichtung verursacht. In Figur 10 weist als Unterschied zu Figur 9 die Wandung 9 einen oder mehrere Vorsprünge 92 auf, die im montierten Zustand in die Dichtung 122 eindrücken und einen verbesserten Dichtschluss bewirken.

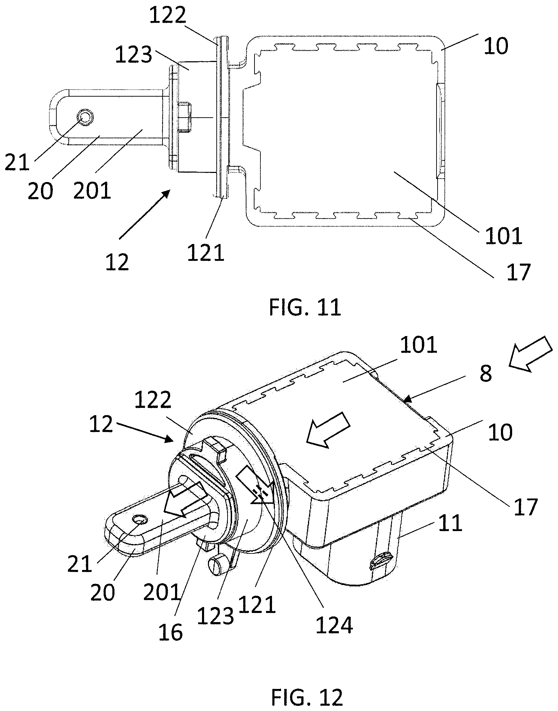

Fig. 11 illustriert eine Aufsicht von unten auf das Sensormodul nach der zweiten Ausführungsform, wieder in unbefestigtem Zustand. Es ist wiederum die Vergussmasse 101 ersichtlich, mit der die vormalige Öffnung 17 im Gehäuse 10 verschlossen ist.

Fig. 12 illustriert eine perspektivische Ansicht auf das Sensormodul nach der zweiten Ausführungsform, ebenfalls in unbefestigtem Zustand.

In einer bevorzugten Variante sind hier, wie es auch bei allen anderen Ausführungen möglich ist, die Dichtung 122 und die Füllmasse 201 miteinander verbunden. Hierbei ummantelt die Füllmasse 201 nicht nur wie im vorliegenden Ausführungsbeispiel gezeigt die Vorderseite des herausragenden Teils der Leiterplatte 20, sondern auch ihre Rückseite, und allenfalls auch noch ihre Seiten. Zusätzlich ist bevorzugt auch die Öffnung 16 mit der Füllmasse vergossen. Zum Erstellen der Dichtung 122 und des Füllmasse 201 in einem einzigen Vergussschritt kann das Befestigungsmittel 12 vorteilhaft einen oder mehrere Kanäle 124 ausweisen, von denen einer in Fig. 12 strichiert angedeutet ist, durch die das Material für die Dichtung 122 hindurchtritt, um die Dichtung 122 zu bilden. Der gezeigte Kanal tritt durch den Zylinderring 123 ausgehend von seiner dem Gehäuseinneren zugewandten Seite und endet an der mittels seiner Hilfe erstellten Dichtung 122.

Ist im obigen Beispiel auch die Öffnung 16 zum Durchtreten der Leiterplatte 20 mit Füllmasse 201 vergossen, so kann der einzige Angusspunkt 8 für das Vergiessen beispielsweise an der Rückseite des Gehäuses 10 sein. In Figur 12 ist ein solcher beispielhafter Angusspunkt 8 eingezeichnet. Hier wird dann bevorzugt auch gleich die Vergussmasse 101 im selben Vergussschritt vergossen. In Summe wird also über den Angusspunkt 8 das Material in das Innere des Gehäuses 10 geleitet. Es breitet sich dann im Inneren des Gehäuses 10 aus, tritt durch die Öffnung 16 in die Gussform für das Umgiessen des herausragenden Teils der Leiterplatte 20, sowie durch die ein oder mehrere Kanäle im Gehäuse 10, insbesondere im Zylinderring 123, in die Gussform für die Dichtung. Dieser Weg ist in Figur 12 durch Pfeile angedeutet. In dieser Ausbildung ist ein einziger Angusspunkt 8 vorgesehen, und in einem einzigen Vergussschritt, bei dem Material über der Angusspunkt 8 zugeführt wird, werden sowohl Dichtung 122, Füllmasse 201 und die Vergussmasse 101 erstellt, z.B. gegossen oder gespritzt.

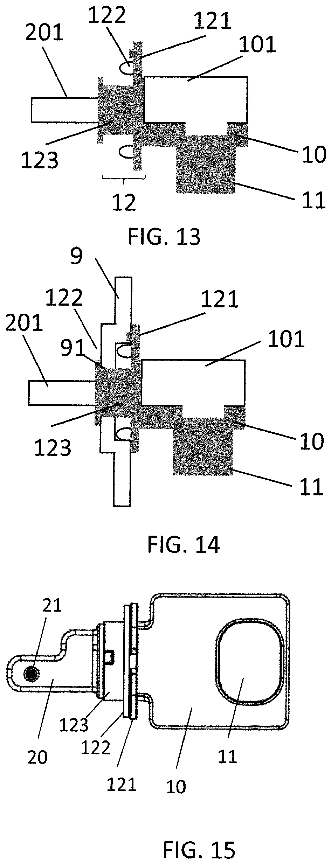

Die Figuren 13 und 14 zeigen schematische Schnitte durch ein Sensormodul nach einem Ausführungsbeispiel der Erfindung. Dieses kann das erste oder das zweite oder das spätere dritte, oder ein anderes beliebiges Ausführungsbeispiel der Erfindung sein. Hier ist nun die Dichtung 122 nicht flach sondern gewölbt ausgebildet und ähnelt damit in ihrem Querschnitt eher einem O-Ring. Dies ändert aber nichts daran, dass die Dichtung 122 auf den Anschlag 121 aufgebracht ist durch Vergiessen mit einer entsprechend geformten Gussform. Der Schnitt nach Figur 13 zeigt das Sensormodul in unbefestigtem Zustand, wohingegen die Seitenansicht nach Figur 14 das Sensormodul befestigt an einer Wandung 9 eines Trägers zeigt, wobei wiederum der Zylinderring 123 des Gehäuses 10 durch eine Öffnung 91 des Trägers 9 ragt, sodass die Leiterplatte 20 in einen Messraum ragt, beispielsweise einen Kanal oder einen Behälter mit dem zu messenden Fluid.

Fig. 15 illustriert eine Aufsicht von unten auf ein Sensormodul zur Bestimmung einer Eigenschaft eines Fluids, beispielsweise zur Luftgütemessung, mit einem Temperatur-/Feuchtesensor auf der Vorderseite einer Leiterplatte 20 gemäß einer dritten Ausführungsform der Erfindung. Dabei besteht der Unterschied zu den ersten beiden Ausführungsformen in Fig. 1-6 bzw. 7-12 in der Form der eingekapselten Leiterplatte 20. Der Teil der Leiterplatte 20, der aus dem Gehäuse heraus- und damit im montierten Zustand in den Luftzufuhrkanal hineinragt, ist in Fig. 8 weniger breit. Dies führt zu einer geringeren Beeinflussung des Luftstroms im Kanal, bzw. des zu messenden Fluids. Wie in der zweiten Ausführungsform ist auf der Leiterplatte 20 bevorzugt auch hier ein integrierter Temperatur-/Feuchtesensor angebracht. Denkbar ist aber für alle Ausführungsformen auch die Verwendung nur eines einzelnen Temperatursensors, wenn die Werte der relativen Feuchtigkeit nicht von Interesse sind.

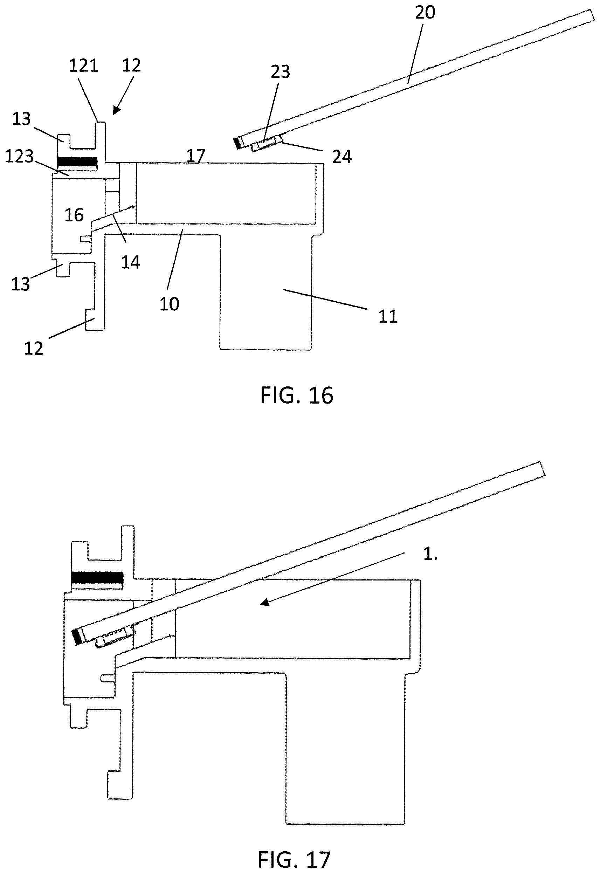

Figs. 16-19 zeigen jeweils eine Seitenansicht eines Gehäuses 10 des Sensormoduls bei der Herstellung, während eine Leiterplatte 20 mit einem Sensor 23 vor dem Vergießen gemäß einer Ausführungsform eingeführt wird. Das Gehäuse 10 mit Ausformungen für Stecker 11 und das als Bajonettverschluss samt Zapfen 13 ausgebildete Befestigungsmittel 12 entspricht dabei weitgehend den in Fig. 1 oder Fig. 7 oder Fig. 15 gezeigten. Die Dichtung am Anschlag 121 ist noch nicht angebracht sondern wird erst nach dem Verbauen der Leiterplatte 20 im Gehäuse hergestellt. Zusätzlich ist in Fig. 16-19 eine Abschrägung 14 erkennbar, deren Zweck im Folgenden erläutert wird.

Die Leiterplatte 20 ist in Fig. 16-19 noch nicht vergossen. Daher ist der Sensor 23 als aufgesetzter Chip sichtbar. Außerdem wird der Sensor 23 von einem ESD-Bügel 24 (electrostatic discharge) überspannt, welcher ihn vor Beschädigung durch elektrostatische Entladung schützt. Auch der ESD-Bügel 24 ist nach dem Vergießen zum großen Teil eingekapselt, was die mechanische Stabilität des Sensormoduls erhöht.

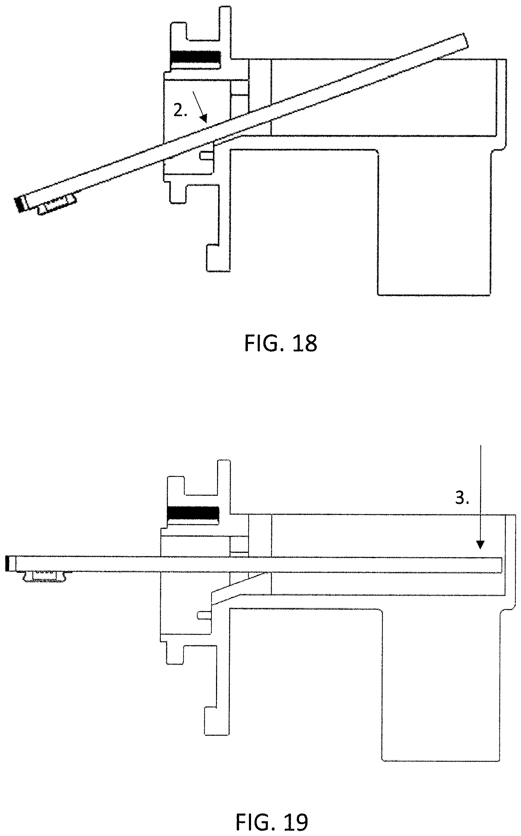

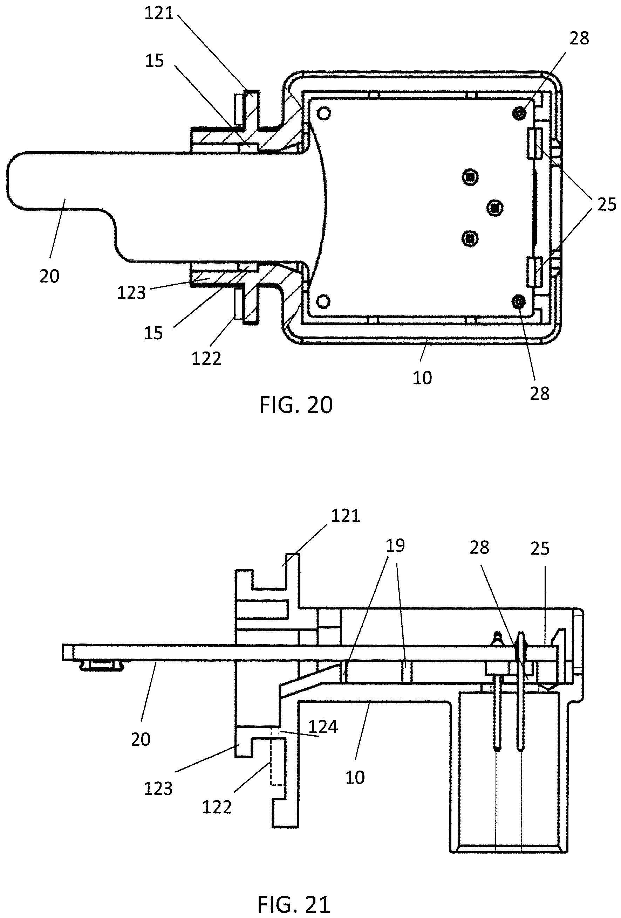

Da der Sensor 23 und der ESD-Bügel 24 vor dem Vergießen leicht beschädigt werden können, wird die Leiterplatte 20 im ersten Montageschritt in Fig. 16 schräg und mit genügend Abstand zur Abschrägung 14 eingeführt, sodass der Sensor 23 und der ESD-Bügel 24 die Abschrägung 14 nicht berühren. In Fig. 17 wird gezeigt, wie die Leiterplatte 20 aus der Öffnung 16 in der Vorderseite des Gehäuses 10 herausgeschoben wird, sodass der Teil der Leiterplatte 20 mit dem Sensor 23 in Fig. 18 aus dem Gehäuse 10 herausragt. Dabei wird die Leiterplatte 20 von einer Führungsvorrichtung 15 geführt, die in Fig. 20 gezeigt ist. In Fig. 18 wird die Leiterplatte dann gegen die Abschrägung 14 gedrückt. Das Einführen der Leiterplatte 20 wird in Fig. 19 abgeschlossen, indem sie über die Abschrägung 14 gekippt wird und damit mit Ausnahme des vorne herausragenden Teils mit dem Sensor 23 vollständig im Gehäuse 10 zu liegen kommt.

Zum Abschluss wird die in Fig. 19 gezeigte Anordnung vergossen. Dazu wird die gesamte Anordnung in senkrechter Ausrichtung wie beispielsweise in Fig. 1 gezeigt in eine Form gesetzt, die für jeden Sensor einen Stempel umfasst, der die Aussparung für den Sensor frei hält. Nun werden sowohl die weitere Öffnung 17 des Gehäuses 10, durch welche die Leiterplatte 20 in Fig. 9-11 eingeführt wurde, verfüllt als auch der aus der Öffnung 16 herausragende Teil der Leiterplatte 20 mit dem Sensor 23 und dem ESD-Bügel 24 mit Ausnahme der Aussparung eingekapselt, wie auch die Dichtung am Anschlag 121, bevorzugt in einem einzigen Verfüllschritt mit einem einzigen Zugangspunkt für das Material, mit dem verfüllt wird. Als Material ist wird bevorzugt ein Hot Melt verwendet. Der Vorteil eines Hot Melts ist, dass beim Verkleben geringere Drücke angewendet werden müssen als bei anderen Methoden wie beispielsweise dem Vergießen mit Spritzguss. Als Füllmasse sind aber beispielsweise auch UV-härtbare Harze denkbar. Am Ende des Fertigungsprozesses steht ein kompaktes und robustes Sensormodul.

Fig. 20 zeigt eine Aufsicht von unten auf ein horizontal durchgeschnittenes Sensormodul zur Bestimmung einer Eigenschaft eines Fluids, beispielsweise zur Luftgütemessung. Die Leiterplatte 20 wird durch die Führungsvorrichtung 15 gegen seitliches Verschieben im Gehäuse 10 gesichert. Außerdem unterstützt die Führungsvorrichtung 15 den oben beschriebenen Einführungsvorgang. Weiterhin helfen zwei Ausrichtungspins 28 beim korrekten Ausrichten der Leiterplatte 20 und Klammern 25 dienen als Arretierungsvorrichtung der Leiterplatte 20 in der gewünschten Position.

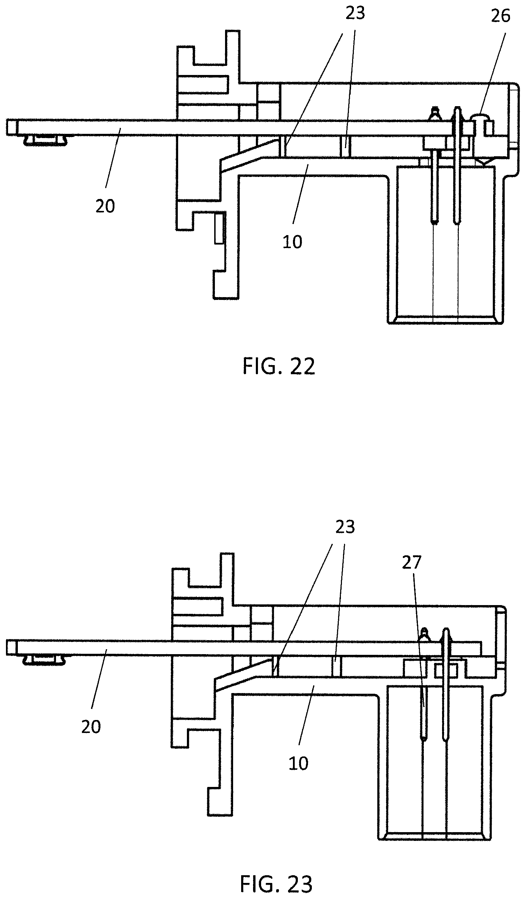

Figs. 21, 22 und 23 illustrieren einen vertikalen Schnitt durch das noch unbefüllte Gehäuse 10 mit verschiedenen Ausführungsformen der Arretierungsvorrichtung für die Leiterplatte 20. Nach oben hin wird die Leiterplatte 20 in vertikaler Richtung dabei von Stützen 19 abgestützt. Nach unten hin dienen in Fig. 21 die Klammern 25 zum Festhalten der Leiterplatte 20. In Fig. 22 dient zur Arretierung nach unten hin ein Pin 26, dessen Ende verschweißt wird, um die Leiterplatte 20 zu halten. In Fig. 23 wird die Arretierung nach unten hin dadurch erreicht, dass ein fest im Gehäuse 10 angebrachter Pin 27 des Steckers 11 mit der Leiterplatte 20 verlötet oder verpresst wird.

In Figur 21 ist beispielhaft ein Kanal 124 im Zylinderring 123 eingezeichnet, durch den die ebenfalls strichiert eingezeichnete Dichtung 122 erstellt wird. Diese Ausführung kann natürlich auch in den diversen anderen Ausführungsbeispielen des Sensormoduls implementiert sein.

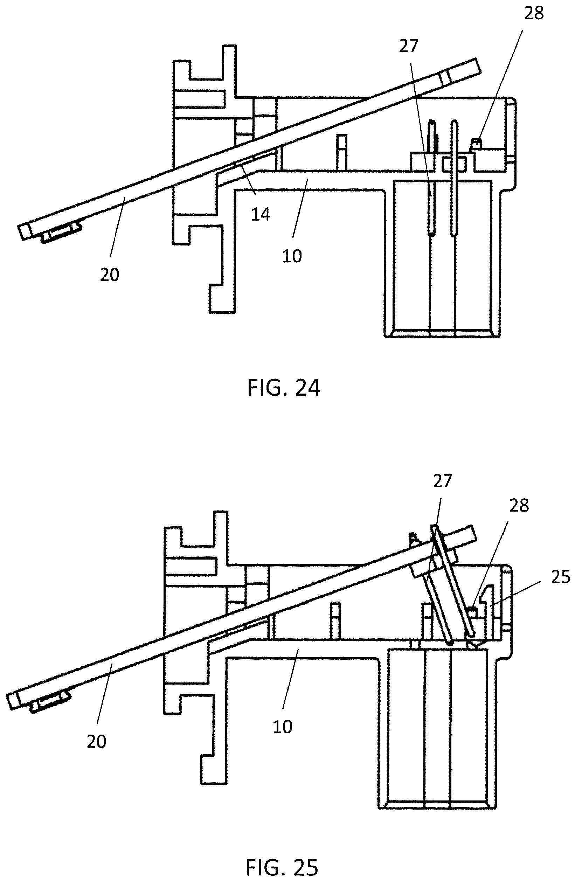

Figs. 24 und 25 zeigen einen vertikalen Schnitt durch das Gehäuse mit zwei Varianten zur Anbringung von Pins 27 eines Steckers 11. In Fig. 24 sind die Pins 27 bereits vor dem Einführen der Leiterplatte 20 in das Gehäuse 10 fest im Gehäuse 10 montiert. Beim Kippen der Leiterplatte über die Abschrägung 14 durchstoßen die Pins 27 die Leiterplatte 20 dann in dafür vorgesehenen Löchern in der Leiterplatte 20. Abschließend werden die Pins 27 mit der Leiterplatte 20 verlötet oder bereits durch das Einpressen fixiert.

In Fig. 25 sind die Pins 27 vor dem Einführen der Leiterplatte 20 in das Gehäuse 10 bereits auf der Leiterplatte 20 verlötet oder in die Leiterplatte 20 eingepresst. Beim Kippen der Leiterplatte 20 über die Abschrägung 14 werden sie dann bis zu ihrer gewünschten Lage in den Stecker 11 eingeführt.

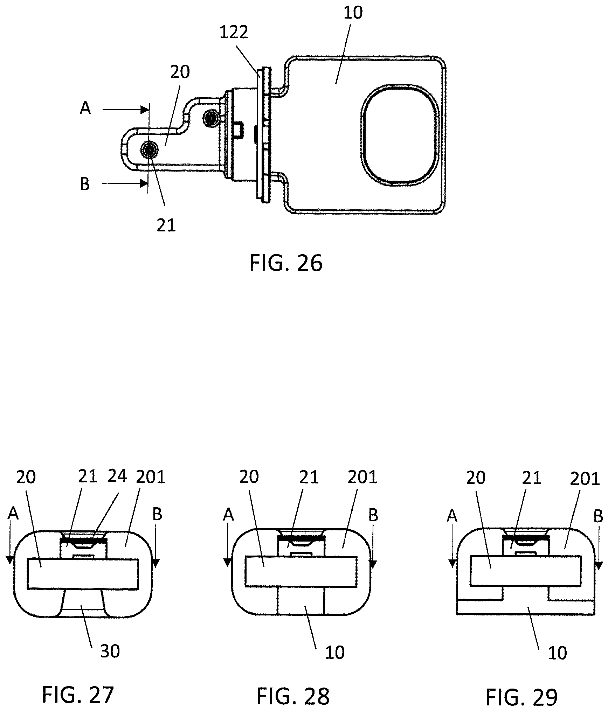

Fig. 26 zeigt eine Aufsicht von oben auf das Sensormodul mit Gehäuse 10 und Leiterplatte 20 sowie Kennzeichnung eines vertikalen Schnitts A-B durch die Leiterplatte 20. In Figs. 27, 28 und 29 sind verschiedene Ausführungsformen des Vergusses der Leiterplatte 20 mit der Füllmasse 201 durch vertikale Schnitte A-B durch die Leiterplatte 20 dargestellt. Bei der Ausführungsform von Fig. 27 ist die komplette Leiterplatte 20 mit Ausnahme einer Aussparung für den Sensor 21 auf der Vorderseite und einer weiteren Aussparung 30 auf der Rückseite mit der Füllmasse 29 eingekapselt. Die weitere Aussparung 30 liegt dem Sensor 21 gegenüber und kommt von einem weiteren Stempel, der beim Vergießen der Leiterplatte 20 mit der Füllmasse 201 einen Gegendruck auf die Rückseite der Leiterplatte 20 ausübt, während auf der Vorderseite ein Stempel Druck auf den ESD-Bügel 24 ausübt.

In den Ausführungsformen von Figs. 28 und 29 befindet sich dem Sensor 21 gegenüber auf der Rückseite der Leiterplatte 20 keine weitere Aussparung, sondern ein Teil des Gehäuses 10 ist entlang der Leiterplatte 20 bis dorthin durchgezogen. Dieser Gehäuseteil unterstützt den herausragenden Teil der Leiterplatte 20 und macht das Sensormodul so robuster. In Fig. 28 beschränkt sich die seitliche Ausdehnung dieses Gehäuseteils entlang des Schnitts A-B auf die Breite des gegenüberliegenden Sensors 21. In Fig. 29 weist der Gehäuseteil im Schnitt A-B die Form eines auf dem Kopf stehenden "T" auf, dessen Breite die Breite der Leiterplatte 20 übertrifft. Der Hohlraum zwischen dem Querstrich des "T" und der Leiterplatte 20 wird beim Einkapseln mit Füllmasse 201 vergossen. Diese Anordnung macht den herausragenden Teil der Leiterplatte 20 noch unempfindlicher gegen mechanische Einwirkungen.

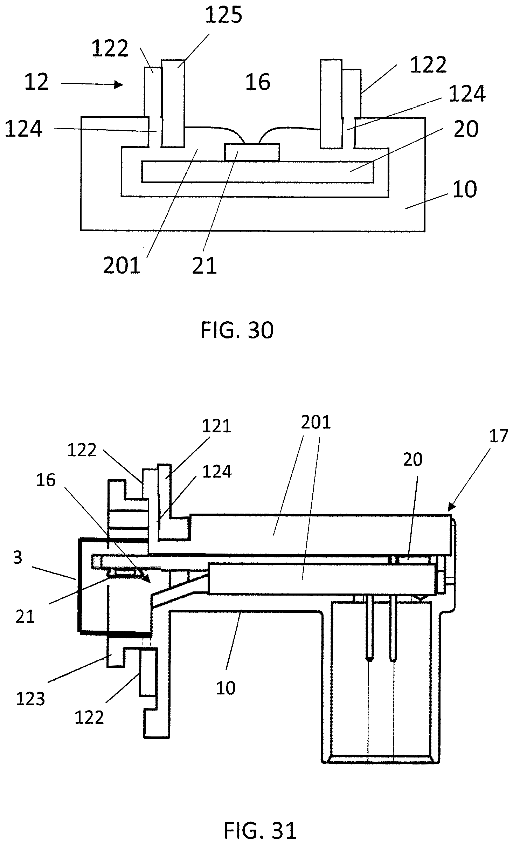

Fig. 30 zeigt einen Schnitt durch ein Sensormodul nach einem Ausführungsbeispiel der Erfindung. Bei dieser Ausführungsform ragt die Leiterplatte 20 nicht durch eine Öffnung des Gehäuses 10 sondern ist vollständig im Gehäuse 10 angeordnet. Ein auf der Leiterplatte 20 angebrachter Sensor 21 ist aber unter einer Öffnung 16 im Gehäuse 10 angeordnet, über welche Öffnung 16 das zu messende Fluid des Sensor 21 erreichen kann. Bevorzugt ist die Leiterplatte 20 mit Ausnahme einer Aussparung für den Sensor 21 mit einer Füllmasse 201 vergossen, welche das Gehäuseinnere abdichtet und die Leiterplatte 20 stabilisiert.

Das Gehäuse 10 weist eine integrale Befestigungsvorrichtung 12 auf, die im Wesentlichen einen Vorsprung 125 aufweist. Dieser Vorsprung 125, ähnlich dem Zylinderring 123 aus Figur 7 definiert nicht nur die Öffnung 16 des Gehäuses 10, sondern dient darüber hinaus auch als Befestigungsmittel in dem Sinne, dass das Sensormodul beispielsweise mit dem Vorsprung 125 in eine Ausnehmung eines Trägers eingeführt werden kann. Die Dichtung 122 ist hierbei in Form eines Ringes auf den Aussenumfang des Vorsprungs 125 aufgebracht.

Aufgrund des Kanals / der Kanäle 124 im Gehäuse 10 ist ersichtlich, dass die Füllmasse 201 wie auch die Dichtung 122 im gleichen Arbeitsschritt / Prozessschritt angebracht wurden. Beispielsweise wird das zugehörige Material an einem Angusspunkt am Aussenumfang des Vorsprungs 125 angegossen, allenfalls mit Druck, sodass sich das Material nicht nur in der die Dichtung 122 definierenden Form ausbreiten kann sondern auch durch den / die Kanäle 124 im Gehäuse 10 in das Gehäuseinnere dringen kann und dort die Leiterplatte 20 umschliesst mit Ausnahme eines Zugangs zum Sensor 21. Der / die Kanäle 124 bleiben mit diesem Material nach dessen Aushärten befüllt. Somit sind Füllmasse 201 und Dichtung 122 verbunden und aus demselben Material. In einer anderen Ausführungsform fehlen die Kanäle 124. Die Dichtung 122 und der Verguss der Leiterplatte 201 werden dann über zwei Angusspunkte erstellt. Sie sind somit nicht miteinander verbunden.

Beispielhaft kann der Vorsprung 125 auch ein Innengewinde oder ein Aussengewinde aufweisen, mit dem das Sensormodul an einem Träger mittels einer Schraubverbindung befestigt werden kann. Hierbei mag die Dichtung 122 an anderer Stelle am Befestigungsmittel 12 angebracht sein.

Fig. 31 zeigt einen Schnitt durch ein Sensormodul nach einem weiteren Ausführungsbeispiel der Erfindung. Beispielsweise repräsentiert die Darstellung in Fig. 31 die Ausführungsform nach Fig. 23 nach dem Vergiessen. Bei dieser Vergussvariante ist der aus dem Gehäuse 10 herausragende Teil der Leiterplatte 20 im Wesentlichen nicht vergossen. Allerdings ist der im Gehäuse 10 liegende Teil der Leiterplatte 20 komplett mit der Füllmasse 201 vergossen. Dichtung 122 und Füllmasse 201 sind miteinander verbunden über einen mit dem Dichtungs- und Füllmassenmaterial befüllten Kanal 124, der insbesondere durch den Zylinderring 123 der Befestigungsvorrichtung 12 führt. Angusspunkt für das Material ist bevorzugt zur Oberseite des Sensormoduls, d.h. an der weiteren Öffnung 17 des Gehäuses 10. Die Öffnung 16 des Gehäuses, durch die die Leiterplatte 10 ragt, ist verschlossen entweder durch das Material der Füllmasse, und / oder durch Bestandteile des Gehäuses 10. Der herausragende Teil der Leiterplatte mit dem Sensor 21 darauf mag wiederum durch eine Kappe 3, beispielsweise aus Kunststoff, zumindest mechanisch geschützt sein. Die Kappe 3 gewährleistet andererseits ausreichenden Zugang des Sensors 21 zum zu messenden Fluid. Die Kappe 3 mag auch als Behälter oder als Kanal für das zu messende Fluid angesehen werden.

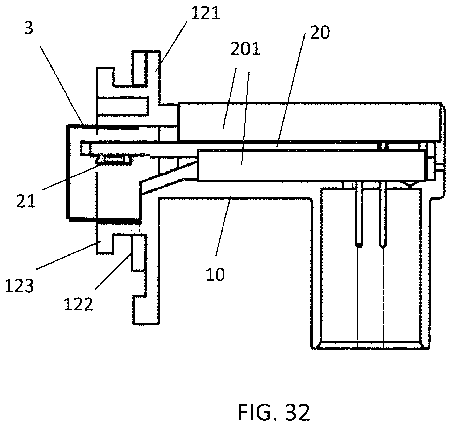

Fig. 32 zeigt einen Schnitt durch ein Sensormodul nach einem weiteren Ausführungsbeispiel der Erfindung. Diese Ausführungsform unterscheidet sich von der Ausführungsform nach Fig. 31 darin, dass der Kanal 124 zum gemeinsamen Füllen von Dichtung 122 und Füllmasse 201 nicht vorgesehen ist. Insofern sind also Dichtung 122 und Füllmasse 201 über zweier Angusspunkte vergossen.

## Patentansprüche

1. Sensormodul zur Bestimmung einer Eigenschaft eines Fluids, insbesondere zur Klima- und/oder Luftgütemessung, umfassend
- eine Leiterplatte (20),
- mindestens einen Sensor (21, 22, 23) auf der Leiterplatte (20) zum Aufnehmen einer Messgröße des Fluids, insbesondere der umgebenden Luft, wobei mindestens ein Teil der Leiterplatte (20) mit Ausnahme einer Aussparung für den mindestens einen Sensor (21, 22, 23) mit einer Füllmasse (201) vergossen ist,
- ein Gehäuse (10) für die Leiterplatte (20),
- eine Befestigungsvorrichtung (12) zum Befestigen des Sensormoduls an einer Wandung (9) eines Kanals oder eines Behälters für das Fluid oder an einer Wandung eines Trägers für das Sensormodul,
- eine auf die Befestigungsvorrichtung (12) aufgebrachte Dichtung (122) zum Anliegen zwischen Gehäuse (10) und Wandung (9) und zum Abdichten des Kanals oder Behälters, wobei die Dichtung (122) ein Hot Melt oder ein UV-härtbares Material oder eine Gussmasse ist,
wobei die Dichtung (122) und die Füllmasse (201) aus dem gleichen Material bestehen.

2. Sensormodul nach Anspruch 1,
wobei der Hot Melt ein Polyamid-Schmelzharz ist,
insbesondere wobei der Hot Melt ein thermoplastischer Polyamid-Schmelzharz ist,
insbesondere bei dem der Hot Melt in ausgehärtetem Zustand eine Härte zwischen 70 und 90 Shore A aufweist.

3. Sensormodul nach einem der vorhergehenden Ansprüche,
wobei die Dichtung (122) unlösbar mit der Befestigungsvorrichtung (12) verbunden ist.

4. Sensormodul nach einem der vorhergehenden Ansprüche,
wobei ein Teil der Leiterplatte (20) aus einer Öffnung (16) im Gehäuse (10) herausragt und der mindestens eine Sensor (21, 22, 23) auf dem herausragenden Teil der Leiterplatte (20) angeordnet ist,
wobei zumindest eine Vorderseite des herausragenden Teils der Leiterplatte (20) mit Ausnahme der Aussparung für den mindestens einen Sensor (21, 22, 23) mit der Füllmasse (201) vergossen ist,
insbesondere wobei zusätzlich zumindest eine Rückseite des herausragenden Teils der Leiterplatte (20) mit Ausnahme einer weiteren Aussparung (30), die dem mindestens einen Sensor (21, 22, 23) gegenüberliegt, mit der Füllmasse (201) vergossen ist,
insbesondere wobei zusätzlich zumindest die Öffnung (16) im Gehäuse (10) mit der Füllmasse (201) vergossen ist.

5. Sensormodul nach Anspruch 4,
wobei das Befestigungsmittel ein Bestandteil des Gehäuses (10) ist und an der Seite des Gehäuses (10) mit der Öffnung (16) angeordnet ist,
insbesondere wobei die Befestigungsvorrichtung (12) einen Anschlag (121) aufweist zum Anlegen des Sensormoduls an die Wandung (9) des Kanals oder des Behälters für das Fluid oder an die Wandung des Trägers für das Sensormodul,
insbesondere wobei sich der Anschlag (121) ringförmig um die Öffnung (16) erstreckt,
insbesondere welches Befestigungsmittel (12) als Bajonettverschluss ausgebildet ist.

6. Sensormodul nach einem der vorhergehenden Ansprüche,
wobei die Dichtung (122) und die Füllmasse (201) miteinander verbunden sind,
insbesondere mit mindestens einem mit dem Material befüllten Kanal (124) im Gehäuse (10) zwischen der Dichtung (122) und der Füllmasse (201),
insbesondere mit einem einzigen Angusspunkt (8) am oder im Gehäuse (10) zum Zuführen des Materials zum Bilden der Dichtung (122) und der Füllmasse (201) in einem einzigen Vergussschritt.

7. Sensormodul nach Anspruch 5 in Verbindung mit Anspruch 6,
wobei die Befestigungsvorrichtung (12) einen Zylinderring (123) aufweist zum Einführen des Sensormoduls in eine Öffnung (91) in der Wandung (9) des Kanals oder des Behälters oder des Trägers bis zu seinem Anschlag (121), welcher Zylinderring (123) die Öffnung (16) des Gehäuses (10) umschliesst oder definiert,
wobei eine Fläche des Anschlags (121) senkrecht ausgerichtet ist zum Mantel des Zylinderrings (123) ,
wobei der Zylinderring (123) den mindestens einen mit der Füllmasse (201) befüllten Kanal (124) aufweist in Form eines Durchbruchs.

8. Sensormodul nach Anspruch 7,
das Gehäuse (10) umfassend eine weitere Öffnung (17) auf einer Seite, die an die Seite mit der Öffnung (16) angrenzt oder dieser gegenüber liegt,
wobei die weitere Öffnung (17) mit einer Vergussmasse (101) vergossen ist.

9. Sensormodul nach Anspruch 8,
wobei die Dichtung (122), die Füllmasse (201) und die Vergussmasse (101) aus dem gleichen Material bestehen.

10. Sensormodul nach Anspruch 9,
wobei die Füllmasse (201), die Dichtung (122) und die Vergussmasse (101) miteinander verbunden sind,
insbesondere mit einem einzigen Angusspunkt (8) am oder im Gehäuse (10) zum Zuführen des Materials zum Bilden der Dichtung (122), der Füllmasse (201) und der Vergussmasse (101) in einem einzigen Vergussschritt.

11. Sensormodul nach einem der vorangehenden Ansprüche,
wobei die Leiterplatte (20) mit Ausnahme einer Aussparung für den mindestens einen Sensor (21, 22, 23) und einer weiteren Aussparung (30), die dem mindestens einen Sensor (21, 22, 23) gegenüberliegt, mit dem Material vergossen ist,
insbesondere wobei das Gehäuse (10) einen Stecker (11) umfasst zum elektrischen Kontaktieren der Leiterplatte (20) von außerhalb des Sensormoduls,
insbesondere wobei sich der Stecker (11) auf einer Seite des Gehäuses (10) befindet, die an die Seite mit der Öffnung (16) angrenzt oder dieser gegenüber liegt.

12. Sensormodul nach einem der vorangehenden Ansprüche,
wobei der mindestens eine Sensor (21, 22, 23) enthält einen oder mehrere aus:
einem Temperatursensor;
einem Feuchtesensor;
einem Gassensor, insbesondere einem MOX-Sensor;
einem Feinstaubsensor.

13. Sensoranordnung, enthaltend
ein Sensormodul nach einem der vorangehenden Ansprüche,
einen Kanal oder einen Behälter für das Fluid oder einen Träger für das Sensormodul,
wobei das Sensormodul an einer Wandung (9) des Kanals oder des Behälters oder des Trägers befestigt ist,
insbesondere welche Wandung (9) einen oder mehrere Vorsprünge (92) aufweist, die in befestigtem Zustand des Sensormoduls in seine Dichtung (122) gedrückt sind,
insbesondere mit einer Öffnung (91) in der Wandung (9), durch die die Leiterplatte (20) des Sensormoduls hindurchtritt, sodass der Sensor (21, 22, 23) dem Fluid in dem Kanal oder dem Behälter oder dem Fluid in der Umgebung des Trägers ausgesetzt ist.

14. Verfahren zum Herstellen eines Sensormoduls zur Bestimmung einer Eigenschaft eines Fluids, beispielsweise zur Klima- und/oder Luftgütemessung, umfassend die folgenden Schritte:
a. Bereitstellen einer Leiterplatte (20) mit mindestens einem Sensor (21, 22, 23), der eine Messgröße des umgebenden Fluids, beispielsweise der umgebenden Luft misst, eines Gehäuses (10) für die Leiterplatte (20), sowie einer Befestigungsvorrichtung (12) zum Befestigen des Sensormoduls an einer Wandung (9) eines Kanals oder eines Behälters für das Fluid oder an einer Wandung eines Trägers für das Sensormodul,
b. Einführen der Leiterplatte (20) in das Gehäuse (10),
c. Vergießen eines Hot Melts oder eines UVhärtbaren Materials oder einer Gussmasse auf dem Befestigungsmittel (12) zum Bilden einer Dichtung (122) zum Anliegen zwischen Gehäuse (10) und Wandung (9) und zum Abdichten des Kanals oder Behälters, und Vergiessen eines Teils der Leiterplatte (20) mit Ausnahme einer Aussparung für den mindestens einen Sensor (21, 22, 23) mit einer Füllmasse (201),
wobei die Dichtung (122) und die Füllmasse (201) aus dem gleichen Material bestehen.

## Claims

1. Sensor module for determining a property of a fluid, in particular for measuring climate and/or air quality, comprising
- a printed circuit board (20),
- at least one sensor (21, 22, 23) on the printed circuit board (20) for recording a measured variable of the fluid, in particular of the surrounding air, wherein at least a part of the printed circuit board (20), with the exception of a recess for the at least one sensor (21, 22, 23), is encapsulated with a filling compound (201),
- a housing (10) for the circuit board (20),
- a fastening device (12) for fastening the sensor module to a wall (9) of a duct or a container for the fluid or to a wall of a support for the sensor module,
- a gasket (122) arranged on the fastening device (12) for abutting between the housing (10) and the wall (9) and for sealing the duct or container, wherein the gasket (122) is a hot melt or a UV-curable material or a casting compound,
wherein the gasket (122) and the filling compound (201) are made of the same material.

2. Sensor module according to claim 1,
wherein the hot melt is a polyamide melt resin,
in particular wherein the hot melt is a thermo-plastic polyamide melt resin,
in particular wherein the hot melt has a hardness of between 70 and 90 Shore A in cured state.

3. Sensor module according to one of the preceding claims,
wherein the gasket (122) is inseparably connected to the fastening device (12).

4. Sensor module according to one of the preceding claims,
wherein a part of the printed circuit board (20) protrudes from an opening (16) in the housing (10) and the at least one sensor (21, 22, 23) is arranged on the protruding part of the printed circuit board (20),
wherein at least a front side of the protruding part of the printed circuit board (20), with the exception of the recess for the at least one sensor (21, 22, 23), is encapsulated with the filling compound (201),
in particular wherein in addition at least one back side of the protruding part of the printed circuit board (20), with the exception of a further recess (30) which is situated opposite the at least one sensor (21, 22, 23), is cast with the filling compound (201),
in particular wherein additionally at least the opening (16) in the housing (10) is sealed with the filling compound (201).

5. Sensor module according to claim 4,
wherein the fastening device is an integral part of the housing (10) and is arranged on the side of the housing (10) with the opening (16),
in particular wherein the fastening device (12) has a stop (121) for placing the sensor module against the wall (9) of the duct or the container for the fluid or against the wall of the support for the sensor module,
in particular wherein the stop (121) extends annularly around the opening (16),
in particular which fastening device (12) is designed as a bayonet lock.

6. Sensor module according to one of the preceding claims,
wherein the gasket (122) and the filling compound (201) are joined together,
in particular with at least one material-filled channel (124) in the housing (10) between the gasket (122) and the filling compound (201),
in particular with a single sprue (8) on or in the housing (10) for feeding the material for forming the gasket (122) and the filling compound (201) in a single casting step.

7. Sensor module according to claim 5 in connection with claim 6,
wherein the fastening device (12) comprises a cylinder ring (123) for inserting the sensor module into an opening (91) in the wall (9) of the duct or the container or the support up to its stop (121), which cylinder ring (123) encloses or defines the opening (16) of the housing (10),
wherein a surface of the stop (121) is aligned perpendicular to the barrel of the cylinder ring (123),
wherein the cylinder ring (123) exhibits the at least one channel (124) filled with the filling compound (201) in the form of a breakthrough.

8. Sensor module according to claim 7,
the housing (10) comprising a further opening (17) on a side adjacent to or opposite the side with the opening (16),
wherein the further opening (17) is sealed with a casting compound (101).

9. Sensor module according to claim 8,
wherein the gasket (122), the filling compound (201) and the casting compound (101) are made of the same material.

10. Sensor module according to claim 9,
wherein the filling compound (201), the gasket (122) and the casting compound (101) are joined together,
in particular with a single sprue (8) on or in the housing (10) for feeding the material for forming the gasket (122), the filling compound (201) and the casting compound (101) in a single casting step.

11. Sensor module according to one of the preceding claims,
wherein the printed circuit board (20) is encapsulated with the material except for a recess for the at least one sensor (21, 22, 23) and a further recess (30) facing the at least one sensor (21, 22, 23),
in particular wherein the housing (10) comprises a plug (11) for electrically contacting the printed circuit board (20) from outside the sensor module,
in particular wherein the plug (11) is located on a side of the housing (10) adjacent to or opposite the side with the opening (16).

12. Sensor module according to one of the preceding claims,
wherein the at least one sensor (21, 22, 23) includes one or more of:
a temperature sensor;
a humidity sensor;
a gas sensor, in particular a MOX sensor;
a particulate matter sensor.

13. Sensor arrangement, comprising
a sensor module according to one of the preceding claims,
a channel or container for the fluid or a support for the sensor module,
wherein the sensor module is fastened to a wall (9) of the duct or the container or the support,
in particular which wall (9) has one or more projections (92) which are pressed into the gasket (122) of the sensor module in the fastened state of the sensor module,
in particular with an opening (91) in the wall (9) through which the printed circuit board (20) of the sensor module extends, such that the sensor (21, 22, 23) is exposed to the fluid in the channel or container or to the fluid in the environment of the support.

14. Method of manufacturing a sensor module for determining a property of a fluid, in particular for measuring climate and/or air quality, comprising the following steps:
a. Providing a printed circuit board (20) with at least one sensor (21, 22, 23) which measures a measured variable of the surrounding fluid, for example of the surrounding air, a housing (10) for the printed circuit board (20), and a fastening device (12) for fastening the sensor module to a wall (9) of a duct or container for the fluid or to a wall of a support for the sensor module,
b. Inserting the printed circuit board (20) into the housing (10),
c. Casting a hot melt or a UV curable material or a casting compound on the fastening means (12) for forming a gasket (122) for abutting between the housing (10) and the wall (9) and for sealing the duct or container, and casting a part of the circuit board (20) except for a recess for the at least one sensor (21, 22, 23) with a filling compound (201),
wherein the gasket (122) and the filling compound (201) are made of the same material.

## Revendications

1. Module de capteur pour la détermination d'une propriété d'un fluide, en particulier pour la mesure du climat et/ou de la qualité de l'air, comprenant
- une carte de circuit imprimé (20),
- au moins un capteur (21, 22, 23) sur la carte de circuit imprimé (20) pour enregistrer une valeur de mesure du fluide, en particulier de l'air ambiant, dans lequel au moins une partie de la carte de circuit imprimé (20), à l'exception d'un évidement pour le au moins un capteur (21, 22, 23), est encapsulée avec une masse de remplissage (201),
- un boîtier (10) pour la carte de circuit imprimé (20),
- un dispositif de fixation (12) pour fixer le module de capteur à une paroi (9) d'un conduit ou d'un récipient pour le fluide ou à une paroi d'un support pour le module de capteur,
- un joint d'étanchéité (122) disposé sur le dispositif de fixation (12) pour s'appuyer entre le boîtier (10) et la paroi (9) et pour étancher le conduit ou le récipient, le joint d'étanchéité (122) étant un matériau thermofusible ou durcissable par UV ou une masse de coulée,
dans lequel le joint d'étanchéité (122) et la masse de remplissage (201) sont faits du même matériau.

2. Module de capteur selon la revendication 1,
dans lequel le matériau thermofusible est une résine polyamide fondue,
en particulier dans lequel le matériau thermofusible est une résine thermoplastique de polyamide fondu,
en particulier dans lequel le matériau thermofusible a une dureté comprise entre 70 et 90 Shore A à l'état durci.

3. Module de capteur selon l'une des revendications précédentes,
dans lequel le joint d'étanchéité (122) est relié de manière inséparable au dispositif de fixation (12) .

4. Module de capteur selon l'une des revendications précédentes,
dans lequel une partie de la carte de circuit imprimé (20) fait saillie d'une ouverture (16) dans le boîtier (10) et le au moins un capteur (21, 22, 23) est disposé sur la partie saillante de la carte de circuit imprimé (20),
dans lequel au moins une face avant de la partie saillante de la carte de circuit imprimé (20), à l'exception de l'évidement pour le au moins un capteur (21, 22, 23), est encapsulée avec le composé de remplissage (201),
en particulier dans lequel, en outre, au moins une face arrière de la partie saillante de la carte de circuit imprimé (20), à l'exception d'un autre renfoncement (30) qui est situé à l'opposé du au moins un capteur (21, 22, 23), est coulée avec le composé de remplissage (201), en particulier dans lequel, en outre, au moins l'ouverture (16) du boîtier (10) est scellée avec la masse de remplissage (201).

5. Module de capteur selon la revendication 4,
dans lequel le dispositif de fixation fait partie intégrante du boîtier (10) et est disposé sur le côté du boîtier (10) avec l'ouverture (16),
en particulier dans lequel le dispositif de fixation (12) comporte une butée (121) pour placer le module de capteur contre la paroi (9) du conduit ou du récipient pour le fluide ou contre la paroi du support du module de capteur,
en particulier dans lequel la butée (121) s'étend de façon annulaire autour de l'ouverture (16),
en particulier le dispositif de fixation (12) étant conçu comme une fermeture à baïonnette.

6. Module de capteur selon l'une des revendications précédentes,
dans lequel le joint (122) et la masse de remplissage (201) sont réunis,
en particulier avec au moins un canal rempli de matériau (124) dans le boîtier (10) entre le joint d'étanchéité (122) et la masse de remplissage (201),
en particulier avec un seul point de remplissage (8) sur ou dans le boîtier (10) pour l'alimentation du matériau pour la formation du joint d'étanchéité (122) et de la masse de remplissage (201) en une seule étape de coulée.

7. Module de capteur selon la revendication 5 en relation avec la revendication 6,
dans lequel le dispositif de fixation (12) comprend un anneau de cylindre (123) pour l'insertion du module de capteur dans une ouverture (91) de la paroi (9) du conduit ou du récipient ou du support jusqu'à sa butée (121), l'anneau de cylindre (123) entourant ou définissant l'ouverture (16) du boîtier (10),
dans lequel une surface de la butée (121) est alignée perpendiculairement à l'enveloppe de la bague cylindrique (123),
dans lequel l'anneau de cylindre (123) présente le au moins un canal (124) rempli de la masse de remplissage (201) sous la forme d'une percée.

8. Module de capteur selon la revendication 7,
le boîtier (10) comprenant une autre ouverture (17) sur un côté adjacent ou opposé au côté avec l'ouverture (16),
dans lequel l'ouverture supplémentaire (17) est scellée avec une masse de coulée (101).

9. Module de capteur selon la revendication 8,
dans lequel le joint d'étanchéité (122), la masse de remplissage (201) et la masse de coulée (101) sont fabriqués du même matériau.

10. Module de capteur selon la revendication 9,
dans lequel la masse de remplissage (201), le joint d'étanchéité (122) et la masse de coulée (101) sont réunis,
en particulier avec un seul point de remplissage (8) sur ou dans le boîtier (10) pour l'alimentation du matériau pour la formation du joint d'étanchéité (122), de la masse de remplissage (201) et de la masse de coulée (101) en une seule étape de coulée.

11. Module de capteur selon l'une des revendications précédentes,
dans lequel la carte de circuit imprimé (20) est encapsulée avec le matériau à l'exception d'un évidement pour le au moins un capteur (21, 22, 23) et un autre évidement (30) faisant face au au moins un capteur (21, 22, 23),
en particulier dans lequel le boîtier (10) comprend une fiche (11) permettant d'établir un contact électrique avec la carte de circuit imprimé (20) depuis l'extérieur du module du capteur,
en particulier dans lequel la fiche (11) est placée sur un côté du boîtier (10) adjacent ou à proximité du côté de l'ouverture (16).

12. Module de capteur selon l'une des revendications précédentes,
dans lequel le au moins un capteur (21, 22, 23) comprend un ou plusieurs des éléments suivants un capteur de température ;
un capteur d'humidité ;
un capteur de gaz, en particulier un capteur MOX ;
un capteur de particules.

13. Agencement de capteurs, comprenant
un module de capteur selon l'une des revendications précédentes,
un canal ou un récipient pour le fluide ou un support pour le module de capteur,
dans lequel le module de capteur est fixé à une paroi (9) du canal ou du boîtier ou du support,
en particulier la paroi (9) présentant une ou plusieurs saillies (92) qui sont enfoncées dans le joint d'étanchéité (122) du module de capteur à l'état fixé de celui-ci,
en particulier avec une ouverture (91) dans la paroi (9) à travers laquelle s'étend la carte de circuit imprimé (20) du module de capteur, de sorte que le capteur (21, 22, 23) est exposé au fluide dans le canal ou le boîtier ou au fluide dans l'environnement du support.

14. Procédé de fabrication d'un module de capteur pour déterminer une propriété d'un fluide, en particulier pour mesurer le climat et/ou la qualité de l'air, comprenant les étapes suivantes :
a. mettre à disposition une carte de circuit imprimé (20) avec au moins un capteur (21, 22, 23) qui mesure une valeur de mesure du fluide environnant, par exemple de l'air ambiant, un boîtier (10) pour la carte de circuit imprimé (20), ainsi qu'un dispositif de fixation (12) pour fixer le module de capteur à une paroi (9) d'un conduit ou d'un boîtier pour le fluide ou à une paroi d'un support pour le module de capteur,
b. insérer la carte de circuit imprimé (20) dans le boîtier (10),
c. couler un matériau thermofusible ou un matériau durcissable par UV ou une masse de coulée sur le dispositif de fixation (12) pour former un joint d'étanchéité (122) destiné à être placé en butée entre le boîtier (10) et la paroi (9) et à sceller le conduit ou le récipient, et couler une partie de la carte de circuit imprimé (20), à l'exception d'un évidement pour le au moins un capteur (21, 22, 23), avec une masse de remplissage (201),
dans lequel le joint d'étanchéité (122) et la masse de remplissage (201) sont faits du même matériau.
